# EUROPEAN PATENT APPLICATION

(11) **EP 2 246 705 A1**
(43) Date of publication of application: **03.11.2010**
(21) Application number: 09712009.1
(22) Date of filing: 20.02.2009
(51) Int. Cl.: G01N 35/10, B01F 3/08, B01F 5/00, G01N 35/02

(54) **STIRRING DEVICE AND ANALYZER**

(30) Priority: 21.02.2008 JP 2008040177
(71) Applicant: Beckman Coulter, Inc., Brea, 92821 CA (US)
(72) Inventor: OGUSU, Hiroyuki, Shizuoka 4110931 (JP)
(74) Representative: Gunzelmann, Rainer
(86) International application number: PCT/JP2009/053086
(87) International publication number: WO 2009/104763

(57) **Abstract**

A stirring device **(1)** capable of correctly detecting abnormality in a stirring process and preventing liquid which has not been stirred in a normal process from being used in an analyzing process, and an analyzer are provided. The stirring device (**1**) according to the present invention includes a nozzle **(2),** a syringe **(14),** and an abnormality detecting section **(35)** for determining whether or not a stirring process has been performed in a normal manner on liquid, which is a stirring subject, in a stirring container (**23**), on the basis of the amount of deviation between a suction pressure waveform indicating a suction pressure change measured by a pressure measuring section **(6),** and a suction pressure waveform pre-obtained during normal stirring.

## Description

### TECHNICAL FIELD

The present invention relates to a stirring device for repeatedly sucking and discharging liquid in a container to stir the liquid, and an analyzer.

### BACKGROUND ART

Analyzers for analyzing blood and bodily fluids are conventionally provided with a dispenser for dispensing a sample or a reagent into a reaction tube, the dispenser having a nozzle for sucking or discharging liquid using pressure transmitted from a syringe. In order to detect abnormal liquid suction of such a dispenser, a detection method is proposed for measuring pressure applied to a nozzle and comparing the rate of change in a measured value of the pressure with a predetermined threshold value to detect nozzle clogging (see Reference 1, for example).

Reference 1: Japanese Laid-Open Publication No. 2000-46846

### DISCLOSURE OF THE INVENTION

In an analyzer for analyzing blood and bodily fluids, a stirring device is used for repeatedly sucking and discharging liquid in a container to stir the liquid in the container. Such a stirring device is used, for example, as a pretreatment device for diluting a sample, such as a whole blood sample, with a diluent, and as a stirring mechanism for stirring liquid and a reagent in a reaction tube to accelerate the reaction. In addition, in order to increase the analyzing accuracy of the analyzer, it is necessary to perform a stirring process appropriately by the pretreatment device and the stirring mechanism. The reason is as follows. If a sample and a diluent are not stirred sufficiently in a container in a pretreatment device, the diluted sample cannot be dispensed accurately. Alternatively, if a sample and a reagent are not stirred sufficiently in a reaction tube in a stirring mechanism within an analyzer, the reaction will not progress appropriately between the sample and the reagent. Thus, in order to increase the analyzing accuracy in such an analyzer, it is necessary to detect whether or not a stirring process is performed in a normal manner in a stirring device.

In a conventional nozzle clogging detecting method, however, clogging can be detected only during liquid suction. As a result of this, in the conventional nozzle clogging detecting method, it is not possible to detect all the abnormalities in a stirring device, and further, it is not possible to detect either abnormal liquid suction due to a cause except for clogging at liquid suction, or abnormal liquid discharge. As such, since it has not been possible to accurately detect abnormal stirring of a stirring device, using the conventional nozzle clogging detecting method, there have been cases where samples which are not sufficiently diluted and reaction liquids which are not sufficiently accelerated for reaction are used in analyzing processes.

The present invention is intended to solve the defect of the conventional technique described above. The objective of the present invention is to provide: a stirring device capable of accurately detecting an abnormal stirring process and preventing liquid, which has not been stirred in a normal manner, from being used in an analyzing process; and an analyzer.

A stirring device according to the present invention for repeating suction and discharge of liquid in a container to stir the liquid includes: a nozzle for sucking or discharging the liquid; a pressure generating section for generating pressure necessary for the nozzle to suck or discharge the liquid; a pressure measuring section for measuring pressure generated by the pressure generating section and applied to the nozzle; and a determining section for determining whether or not a stirring process has been performed on the liquid in a normal manner, on the basis of an amount of deviation between a suction pressure waveform indicating a suction pressure change measured by the pressure measuring section, and a suction pressure waveform pre-obtained during normal stirring, thereby achieving the objective described above.

Further, in the stirring device according to the present invention, the determining section determines that the stirring process has been performed on the liquid in a normal manner when an integrated value of suction pressure measurement values within a predetermined period of time of the suction pressure waveform measured by the pressure measuring section is within a first tolerance range, which is set on the basis of an integrated value of pressure measurement values within the predetermined period of time of the suction pressure waveform pre-obtained during normal stirring; and determines that the stirring process has not been performed on the liquid in a normal manner when the integrated value of the suction pressure measurement values measured by the pressure measuring section has deviated out of the first tolerance range.

Still further, in the stirring device according to the present invention, the determining section determines that the stirring process has not been performed on the liquid in a normal manner due to an insufficient liquid amount or the nozzle not reaching a liquid surface, when the integrated value of the suction pressure measurement values measured by the pressure measuring section is more than an upper limit of the first tolerance range; and determines that the stirring process has not been performed on the liquid in a normal manner due to clogging in the nozzle, when the integrated value of the suction pressure measurement values measured by the pressure measuring section is less than a lower limit of the first tolerance range.

Still further, in the stirring device according to the present invention, a stirring device for repeating suction and discharge of liquid in a container to stir the liquid includes: a nozzle for sucking or discharging the liquid; a pressure generating section for generating pressure necessary for the nozzle to suck or discharge the liquid; a pressure measuring section for measuring pressure generated by the pressure generating section and applied to the nozzle; and a determining section for determining whether or not a stirring process has been performed on the liquid in a normal manner, on the basis of an amount of deviation between a discharge pressure waveform indicating a discharge pressure change measured by the pressure measuring section, and a discharge pressure waveform pre-obtained during normal stirring.

Still further, in the stirring device according to the present invention, the determining section determines that the stirring process has been performed on the liquid in a normal manner when an integrated value of discharge pressure measurement values within a predetermined period of time of the discharge pressure waveform measured by the pressure measuring section is within a second tolerance range, which is set on the basis of an integrated value of pressure measurement values within the predetermined period of time of the discharge pressure waveform pre-obtained during normal stirring; and determines that the stirring process has not been performed on the liquid in a normal manner when the integrated value of the discharge pressure measurement values measured by the pressure measuring section has deviated out of the second tolerance range.

Still further, in the stirring device according to the present invention, the determining section determines that the stirring process has not been performed on the liquid in a normal manner due to clogging in the nozzle, when the integrated value of the discharge pressure measurement values measured by the pressure measuring section is more than an upper limit of the second tolerance range; and determines that the stirring process has not been performed on the liquid in a normal manner due to an insufficient liquid amount or the nozzle not reaching a liquid surface, when the integrated value of the discharge pressure measurement values measured by the pressure measuring section is less than a lower limit of the second tolerance range.

Still further, in the stirring device according to the present invention, a stirring device for repeating suction and discharge of liquid in a container to stir the liquid includes: a nozzle for sucking or discharging the liquid; a pressure generating section for generating pressure necessary for the nozzle to suck or discharge the liquid; a pressure measuring section for measuring pressure generated by the pressure generating section and applied to the nozzle; and a determining section for determining whether or not a stirring process has been performed on the liquid in a normal manner, on the basis of an amount of deviation between a suction pressure waveform indicating a suction pressure change measured by the pressure measuring section, and a suction pressure waveform pre-obtained during normal stirring as well as an amount of deviation between a discharge pressure waveform indicating a discharge pressure change measured by the pressure measuring section, and a discharge pressure waveform pre-obtained during normal stirring.

Still further, in the stirring device according to the present invention, the determining section determines that the stirring process has been performed on the liquid in a normal manner when an integrated value of suction pressure measurement values within a predetermined period of time of the suction pressure waveform measured by the pressure measuring section is within a first tolerance range, which is set on the basis of an integrated value of pressure measurement values within the predetermined period of time of the suction pressure waveform pre-obtained during normal stirring, and when an integrated value of discharge pressure measurement values within a predetermined period of time of the discharge pressure waveform measured by the pressure measuring section is within a second tolerance range, which is set on the basis of an integrated value of pressure measurement values within the predetermined period of time of the discharge pressure waveform pre-obtained during normal stirring; and determines that the stirring process has not been performed on the liquid in a normal manner when the integrated value of the suction pressure measurement values measured by the pressure measuring section has deviated out of the first tolerance range and/or when the integrated value of the discharge pressure measurement values measured by the pressure measuring section has deviated out of the second tolerance range.

Still further, in the stirring device according to the present invention, the determining section determines that the stirring process has not been performed on the liquid in a normal manner due to an insufficient liquid amount, the nozzle not reaching a liquid surface, clogging in the nozzle or the nozzle contacting a bottom surface of the container, in accordance with each combination of: when the integrated value of the suction pressure measurement values measured by the pressure measuring section is more than the upper limit of the first tolerance range; or when the integrated value of the suction pressure measurement values measured by the pressure measuring section is less than the lower limit of the first tolerance range; as well as when the integrated value of the discharge pressure measurement values measured by the pressure measuring section is more than the upper limit of the second tolerance range; or when the integrated value of the discharge pressure measurement values measured by the pressure measuring section is less than the lower limit of the second tolerance range.

Still further, in the stirring device according to the present invention, the first tolerance range is set on the basis of the integrated value of pressure measurement values within the predetermined period of time of the suction pressure waveform pre-obtained during normal stirring, and dispensing accuracy of a dispensing device for dispensing the liquid stirred by the stirring device.

Still further, in the stirring device according to the present invention, the second tolerance range is set on the basis of the integrated value of pressure measurement values within the predetermined period of time of the discharge pressure waveform pre-obtained during normal stirring, and dispensing accuracy of a dispensing device for dispensing the liquid stirred by the stirring device.

Still further, in the stirring device according to the present invention, the pressure measuring section measures pressure applied to the nozzle for each suction process at the nozzle, and the determining section calculates an average value of integrated values of suction pressure measurement values at suction processes measured by the pressure measuring section, and compares the calculated average value of the integrated values with the first tolerance range to determine whether or not the stirring process has been performed on the liquid in a normal manner.

Still further, in the stirring device according to the present invention, the pressure measuring section measures pressure applied to the nozzle for each discharge process at the nozzle, and the determining section calculates an average value of integrated values of discharge pressure measurement values at discharge processes measured by the pressure measuring section, and compares the calculated average value of the integrated values with the second tolerance range to determine whether or not the stirring process has been performed on the liquid in a normal manner.

Still further, in the stirring device according to the present invention, the predetermined period of time is a period of time when a pressure waveform shape measured by the pressure measuring section is stabilized.

Still further, an analyzer according to the present invention includes any one of the above-described stirring device according to the present invention.

According to the present invention, in a stirring device for repeating suction and discharge of liquid in a container to stir the liquid, it is determined whether or not a stirring process has been performed in a normal manner on liquid in a container, which is a stirring subject, on the basis of at least one of the amount of deviation between a suction pressure waveform, indicating a measured suction pressure change, and a suction pressure waveform pre-obtained during normal stirring, or the amount of deviation between a discharge pressure waveform, indicating a discharge pressure change measured by a pressure measuring section, and a discharge pressure waveform pre-obtained during normal stirring. Thereby, it is possible to prevent liquid, which has not been stirred in a normal manner, from being used in an analyzing process.

### BRIEF DESCRIPTION OF THE DRAWINGS

Figure **1** is a diagram schematically illustrating a structure of a stirring device according to Embodiment 1.
Figure **2** is a diagram illustrating time dependence between suction pressure of normal stirring and suction pressure of abnormal stirring.
Figure **3** is a diagram illustrating time dependence between suction pressure of normal stirring and suction pressure of abnormal stirring.
Figure **4** is a diagram describing an abnormality determining process of a stirring process of the stirring device illustrated in Figure **1****.**
Figure **5** is a flowchart illustrating process steps of a stirring process of the stirring device illustrated in Figure **1****.**
Figure **6** is a flowchart illustrating process steps of an abnormal stirring detecting process illustrated in Figure **5****.**
Figure **7** is a diagram illustrating time dependence between suction pressure of normal stirring and suction pressure of abnormal stirring.
Figure **8** is a diagram describing an abnormality determining process of a stirring process of the stirring device illustrated in Figure **1****.**
Figure **9** is a diagram schematically illustrating a structure of a stirring device according to Embodiment **2.**
Figure **10** is a diagram illustrating time dependence between discharge pressure of normal stirring and discharge pressure of abnormal stirring.
Figure **11** is a diagram illustrating time dependence between discharge pressure of normal stirring and discharge pressure of abnormal stirring.
Figure **12** is a diagram describing an abnormality determining process of a stirring process of the stirring device illustrated in Figure **9****.**
Figure **13** is a flowchart illustrating process steps of a stirring process illustrated in Figure **9****.**
Figure **14** is a flowchart illustrating process steps of an abnormal stirring detecting process illustrated in Figure **13****.**
Figure **15** is a diagram illustrating time dependence between discharge pressure of normal stirring and discharge pressure of abnormal stirring.
Figure **16** is a diagram describing an abnormality determining process of a stirring process of the stirring device illustrated in Figure **9****.**
Figure **17** is a diagram schematically illustrating a structure of a stirring device according to Embodiment **3.**
Figure **18** is a flowchart illustrating process steps of a stirring process illustrated in Figure **17****.**
Figure **19** is a flowchart illustrating process steps of an abnormal stirring detecting process illustrated in Figure **18****.**
Figure **20** is a diagram exemplifying a determination table referred to by an abnormality detecting section illustrated in Figure **17****.**
Figure **21** is a schematic perspective view illustrating an exemplary internal structure of an analyzer applied with a stirring device according to an embodiment.

- **1, 201, 301**: stirring device
- **2**: nozzle
- **3**: nozzle transferring section
- **4**: syringe
- **4a**: cylinder
- **4b**: piston
- **5**: tube
- **6**: pressure measuring section
- **7**: piston driving section
- **8**: tube
- **9**: electromagnetic valve
- **10**: pump
- **11**: cleaning liquid tank
- **12**: nozzle
- **14**: syringe
- **14a**: cylinder
- **14b**: piston
- **15**: tube
- **17**: piston driving section
- **18**: tube
- **19**: electromagnetic valve
- **20**: pump
- **21**: diluent tank
- **22**: container
- **23**: stirring container
- **30**: controlling section
- **34**: input section
- **35, 235, 335**: abnormality detecting section
- **36**: storing section
- **37**: output section
- **61**: pressure sensor
- **62**: signal processing circuit
- **401**: analyzer
- **404**: controlling section
- **411**: sample rack conveying section
- **415**: sample dispensing section
- **417**: diluted sample rack conveying section
- **419**: diluted sample rack
- **421**: diluent dispensing section
- **423**: diluted sample dispensing section
- **425**: plate conveying section
- **427**: microplate
- **429**: reagent dispensing section
- **431**: reagent storing section
- **433**: measuring section
- **435**: plate collecting section
- **441**: analyzing section
- **443**: input section
- **445**: output section
- **4111**: rack feeder
- **4271**: reaction container
- **4311**: reagent container
- **4331**: image capturing section
- **4333**: light source
- **La**: diluent
- **Sa**: sample
- **Sb**: liquid
- **Wa**: cleaning liquid

### BEST MODE FOR CARRYING OUT THE INVENTION

Hereinafter, embodiments of the present invention will be described, with reference to accompanying figures, with an example of a stirring device functioning as a pretreatment device of an analyzer, for diluting a sample, such as blood or urine, and a diluent. It is noted that the present invention is not limited to the embodiments. It is also note that corresponding portions of the figures are given the same reference numerals.

### (Embodiment 1)

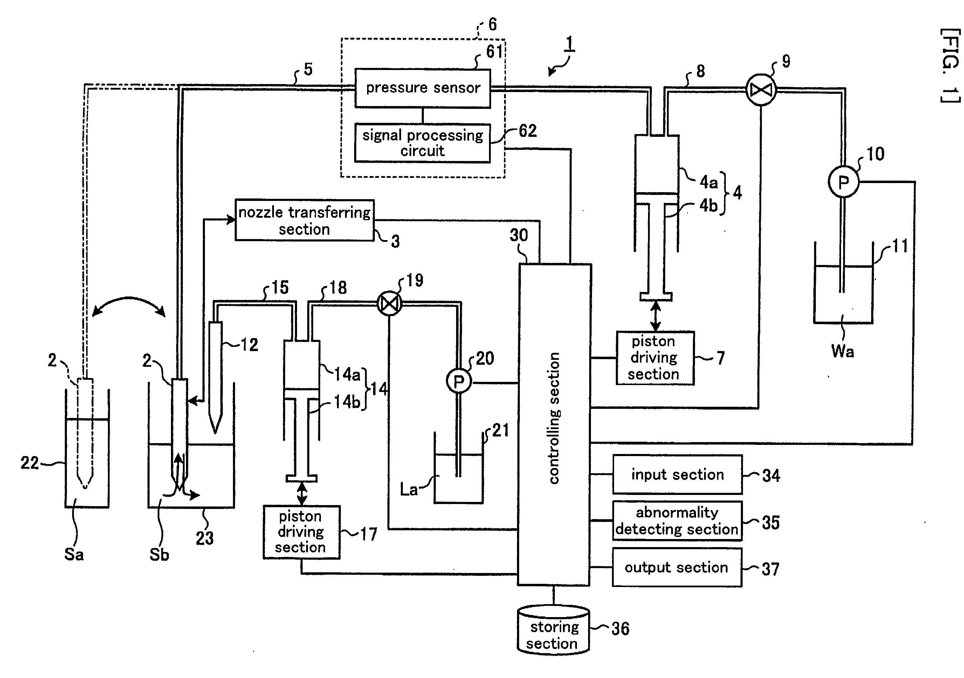

First, Embodiment 1 will be described. Figure **1** is a diagram schematically illustrating a structure of a stirring device according to Embodiment 1. A stirring device **1** illustrated in Figure **1** includes: a tubular nozzle **2** for sucking and discharging a liquid **Sb** in a stirring container **23,** the liquid being a stirring subject; anozzle transferring section **3** for transferring the nozzle **2** by performing raising and lowering operations on the nozzle **2** in a vertical direction and a rotating operation on the nozzle **2** in a horizontal direction; a syringe **4** for performing sucking and discharging operations of a cleaning liquid **Wa,** functioning as a pressure transmitting medium for transmitting pressure to the nozzle **2;** a tube **5** for connecting the nozzle **2** and the syringe **4** to create a flowing pathway of the cleaning liquid **Wa;** and a pressure measuring section **6** for detecting pressure applied to the nozzle **2**. The cleaning liquid **Wa** is an incompressible fluid, such as ion exchanged water or distilled water.

The nozzle **2,** nozzle transferring section **3,** syringe **4** and tube **5** repeat sucking and discharging of a sample in the stirring container **23,** the sample being the liquid of a stirring subject, and a diluent to stir the liquid in the stirring container **23,** and also dispense a predetermined amount of a sample **Sa** from a container **22,** in which the sample **Sa** is contained, into the stirring container **23,** where the sample **Sa** includes a whole blood sample, urine or the like, and is a diluting subject.

The stirring device **1** further includes: a tubular nozzle **12** for injecting a diluent **La** into the stirring container **23;** a nozzle transferring section (not shown) for transferring the nozzle **12** by performing raising and lowering operations on the nozzle **12** in a vertical direction and a rotating operation on the nozzle **2** in a horizontal direction; a syringe **14** for performing sucking and discharging operations of the diluent **La;** and a tube **15** for connecting the nozzle **12** and the syringe **14** to create a flowing pathway of the diluent **La.** The diluent **La** is ion exchanged water or the like. The nozzle **12,** syringe **14** and tube **15** dispense a predetermined amount of the diluent **La** for diluting sample **Sa,** from a diluent tank **21** into the stirring container **23.**

The syringe **4** includes a cylinder **4a** and a piston **4b,** and the piston **4b** slides inside the cylinder **4a** by a piston driving section **7** in vertical upward and downward directions in Figure **1****,** thereby generating pressure to be transmitted to the nozzle **2** via the cleaning liquid **Wa**. The syringe **4** achieves part of functions of a pressure generating section for generating pressure necessary for the nozzle **2** to suck or discharge the liquid inside the stirring container **23.** The syringe **4** is also connected to a tube **8,** other than the tube **5.** The other end of the tube **8** reaches a cleaning liquid tank **11** which contains the cleaning liquid **Wa.** In addition, the tube **8** is provided with an electromagnetic valve **9** for adjusting a flow rate of the cleaning liquid **Wa** and a pump **10** for performing sucking and discharging operations of the cleaning liquid **Wa.** When the electromagnetic valve **9** is opened, the cleaning liquid **Wa** sucked up by the pump **10** is supplied into the cylinder **4a.**

The pressure measuring section **6** includes: a pressure sensor **61,** connected with the tube **5,** for detecting a pressure change of the cleaning liquid **Wa** filling the tube **5** to convert it into an electric signal; and a signal processing circuit **62** for performing signal processing, such as amplification and A/D conversion, to the electric signal output from the pressure sensor **61.** Thereby the pressure measuring section **6** measures pressure applied to the nozzle **2.** It is more preferable to dispose the pressure measuring section **6** near the nozzle **2;** however, depending on conditions such as the sensitivity of the pressure sensor **61,** the pressure measuring section **6** may be disposed in a middle portion of the nozzle **2** and the syringe **4,** or may be disposed near the syringe **4.**

In addition, the syringe **14** includes a cylinder **14a** and a piston **14b.** The syringe **14** is also connected to a tube **18,** other than the tube **15.** The other end of the tube **18** reaches a diluent tank **21** which contains the diluent **La.** In addition, the tube **18** is provided with an electromagnetic valve **19** for adjusting a flow rate of the diluent **La** and a pump **20** for performing sucking and discharging operations of the diluent **La**. When the electromagnetic valve **19** is opened, the diluent **La** sucked up by the pump **20** is supplied into the cylinder **14a.** In addition, the piston **14b** slides inside the cylinder **14a** by a piston driving section **17** in vertical upward and downward directions in Figure **1****,** thereby a predetermined amount of the diluent **La** from the syringe **14** is inj ected through the nozzle **12** into the stirring container **23.**

The stirring device **1** further includes: a controlling section **30** for controlling a motion process of elements constituting the stirring device **1;** an input section **34** for inputting various information; an abnormality detecting section **35** for detecting an abnormality in a stirring process in the stirring device **1;** a storing section **36** for storing various information used for an abnormality detecting process by the abnormality detecting section **35**; and an output section **37** for outputting various information.

The abnormality detecting section **35** detects whether or not a stirring process is performed in a normal manner on the liquid **Sb** in the stirring container **23,** on the basis of the amount of deviationbetweena suction pressure waveform pre-obtained during normal stirring and a suction pressure waveform, measured by the pressure measuring section **6,** indicating a suction pressure change.

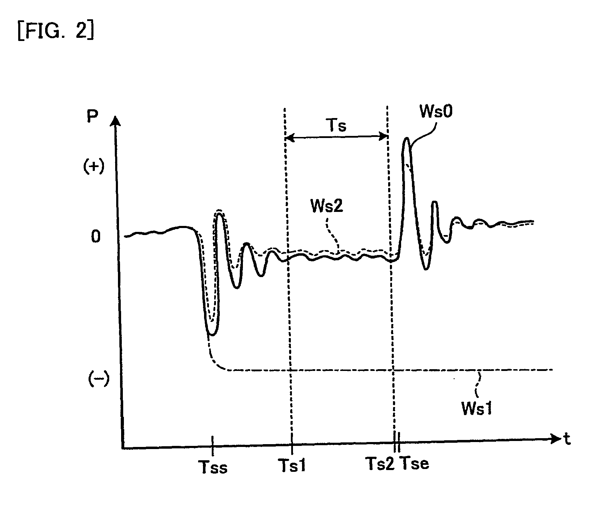

With reference to Figure **2****,** a suction pressure waveform of normal stirring and a suction pressure waveform of abnormal stirring will be specifically described. Figure **2** is a diagram illustrating time dependence between suction pressure of normal stirring and suction pressure of abnormal stirring. In Figure **2****,** the number 0 in the axis of ordinates approximately represents atmospheric pressure. A waveform **Ws0** in Figure **2** represents the suction pressure waveform of normal stirring. Further, a waveform **Ws1** represents a suction pressure waveform of abnormal stirring resulting from the occurrence of clogging by fibrin or the like in the nozzle **2.** Still further, a waveform **Ws2** represents a suction pressure waveform of abnormal stirring resulting from the insufficient amount of liquid of a stirring subj ect, or the nozzle **2** not reaching a liquid surface. In addition, the piston **4b** starts sliding in the downward direction at a time **Tss** to start the suction of the liquid. Subsequently, the piston **4b** stops sliding in the downward direction at a time **Tse** to end the suction of the liquid.

As represented by the waveform **Ws0** in Figure **2****,** during normal stirring, the pressure waveform is represented with the amplitude becoming gradually smaller with the elapse of suction. On the contrary, when the nozzle **2** is clogged as represented by the waveform **Ws1** of abnormal stirring in Figure **2** resulting from the occurrence of clogging in the nozzle **2,** the suction pressure is rapidly decreased immediately after the start of the suction, and a saturated condition continues at a value with high negative pressure (lower than atmospheric pressure but the absolute value is high) . In addition, when the amount of liquid of a stirring subject is not sufficient as represented by a waveform Ws2 of abnormal stirring resulting from the insufficient amount of the liquid or the nozzle **2** not reaching a liquid surface, the suction pressure value is indicated by a value with a lower negative pressure (with a smaller absolute value) compared to the case of normal stirring because the nozzle **2** cannot suck a predetermined amount of the liquid.

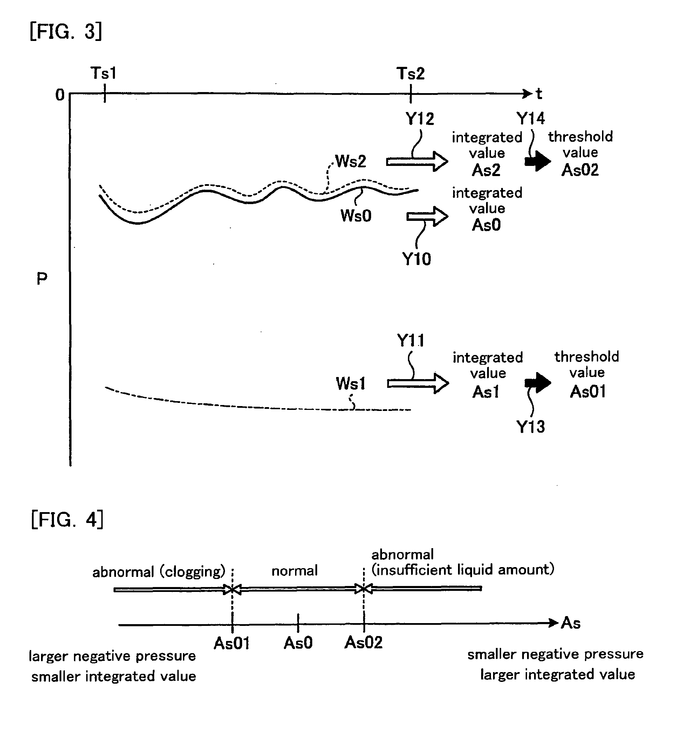

Next, Figure **3** illustrates each of the waveforms within a predetermined period of time **Ts,** from a time **Ts1** toa time **Ts2,** wheneachof the pressure waveforms is stabilized. As illustrated in Figure **3****,** the waveform **Ws1** of abnormal stirring resulting from the occurrence of clogging in the nozzle **2** continues to represent a value with constantly higher negative pressure than the waveform **Ws0** of normal stirring. As a result, an integrated value **As1** with respect to the waveform **Ws1,** represented by an arrow **Y11,** is remarkably smaller (where the absolute value becomes greater) than an integrated value **As0** with respect to the waveform **Ws0** of normal stirring, represented by an arrow **Y10.** Thus, when the nozzle **2** is clogged, the integrated value **As1** of suction pressure values during the predetermined period of time **Ts** constantly becomes smaller than the integrated value **As0** of normal stirring.

As described above, in the stirring device **1,** it is determined whether or not there is an abnormality in the stirring process by making use of the fact that when the nozzle **2** is clogged, the integrated value of suction pressure values during the predetermined period of time **Ts** becomes remarkably smaller than the integrated value **As0** with respect to the waveform **Ws0** of normal stirring.

More specifically, the stirring device **1** sets a predetermined threshold value **As01** as represented by an arrow **Y13** on the basis of the integrated value **As0** of normal stirring and the integrated value **As1** of abnormal stirring resulting from the occurrence of clogging in the nozzle **2,** and determines abnormal stirring due to the occurrence of clogging in the nozzle **2,** using the threshold value **As01.** The threshold value **As01** is set on the basis of the integrated value of pressure measurement values within the predetermined period of time **Ts** of the suction pressure waveform pre-obtained during normal stirring. The integrated value of pressure measurement values during the predetermined period of time **Ts** of the pre-obtained suction pressure waveform of normal stirring, is obtained as follows: in a normal condition, a stirring process is performed for a set number of times, and the integrated value of pressure measurement values during the predetermined period of time **Ts** is obtained for each stirring process; and the average of the integrated values is calculated. In addition, since it is necessary for an accurate amount of each of a diluent and a stirred sample to be dispensed by the stirring device **1,** the threshold value **As01** is determined on the basis of dispensing accuracy of a dispensing mechanism for dispensing a predetermined amount of liquid, which is stirred by the stirring device **1,** for an analyzing process. For example, the threshold value **As01** is a value obtained by subtracting 20% from the average value of the integrated values **As0** of respective pressure measurement values of normal stirring.

Therefore, as illustrated in Figure **4****,** when the integrated value of suction pressure values is less than the threshold value **As01** during the predetermined period of time **Ts**, during which each pressure waveform is stabilized, it can be determined that the nozzle **2** is clogged and the stirring process has not been performed in a normal manner.

Further, as illustrated in Figure **3****,** in most of the cases, the waveform **Ws2** of abnormal stirring, which is resulting from the insufficient amount of liquid or the nozzle **2** not reaching the liquid surface, continues to represent a value with low negative pressure compared to the waveform **Ws0** of normal stirring. Therefore, an integrated value **As2** with respect to the waveform **Ws2** represented by the arrow **Y12** is greater (where the absolute value is smaller) than the integrated value **As0** with respect to the waveform **Ws0** of normal stirring. Thus, in the case where the amount of liquid of a stirring subject is not sufficient or the nozzle **2** does not reach the liquid surface, the integrated value **As2** of suction pressure values during the predetermined period of time **Ts** becomes greater than the integrated value **As0** with respect to the waveform **Ws0** of normal stirring.

As described above, in the stirring device **1,** it is determined whether or not there is an abnormality in the stirring process by making use of the fact that when the amount of liquid of a stirring subject is not sufficient or the nozzle **2** does not reach the liquid surface, the integrated value of suction pressure values during the predetermined period of time **Ts** becomes greater than the integrated value **As0** with respect to the waveform **Ws0** of normal stirring. More specifically, the stirring device **1** sets a predetermined threshold value **As02** as represented by an arrow **Y14** on the basis of the integrated value **As0** of normal stirring and the integrated value **As2** of abnormal stirring resulting from the insufficient amount of liquid or the nozzle 2 not reaching the liquid surface, and determines abnormal stirring due to the insufficient amount of liquid or the nozzle **2** not reaching the liquid surface, using the threshold value **As02.** The threshold value **As02** is set on the basis of the integrated value of pressure measurement values within the predetermined period of time **Ts** of the suction pressure waveform pre-obtained during normal stirring. In addition, since it is necessary for an accurate amount of each of a diluent and a stirred sample to be dispensed by the stirring device **1,** the threshold value **As02** is determined on the basis of dispensing accuracy of a dispensing mechanism for dispensing a predetermined amount of liquid, which is stirred by the stirring device **1,** for an analyzing process. For example, the threshold value **As02** is a value obtained by adding 20% to the average value of the integrated values **As0** of respective pressure measurement values of normal stirring.

Therefore, as illustrated in Figure **4****,** when the integrated value of suction pressure values is more than the threshold value **As02** during the predetermined period of time **Ts**, during which each pressure waveform is stabilized, it can be determined that the amount of the liquid is not sufficient or the nozzle **2** does not reach the liquid surface and the stirring process has not been performed in a normal manner.

That is, as illustrated in Figure **4****,** when the integrated value of suction pressure values is within the range from the threshold value **As02** to the threshold value **As01** during the predetermined period of time **Ts,** during which each pressure waveform is stabilized, that is, when the integrated value is within the range of the upper limit of the threshold value **As02** and the lower limit of the threshold value **As01,** it can be determined that the stirring process is performed in a normal manner in the stirring device **1.** In addition, when the integrated value of suction pressure values is less than the threshold value **As01,** it can be determined that the nozzle **2** is clogged and the stirring process has not been performed in a normal manner. Further, when the integrated value of suction pressure values is more than the threshold value **As02,** it can be determined that the amount of liquid is not sufficient or the nozzle **2** does not reach the liquid surface, resulting in an abnormal stirring process.

As described above, in the stirring device **1,** the presence of abnormality in the stirring process and the cause of the abnormal stirring are determined on the basis of the integrated value **As0** of normal stirring and tolerance between the threshold value **As02** and the threshold value **As01,** which is set on the basis of dispensing accuracy of a dispensing device for dispensing a predetermined amount of liquid stirred by the stirring device **1.** In addition, it is noted that the storing section **36** stores the threshold value **As01** and the threshold value **As02.**

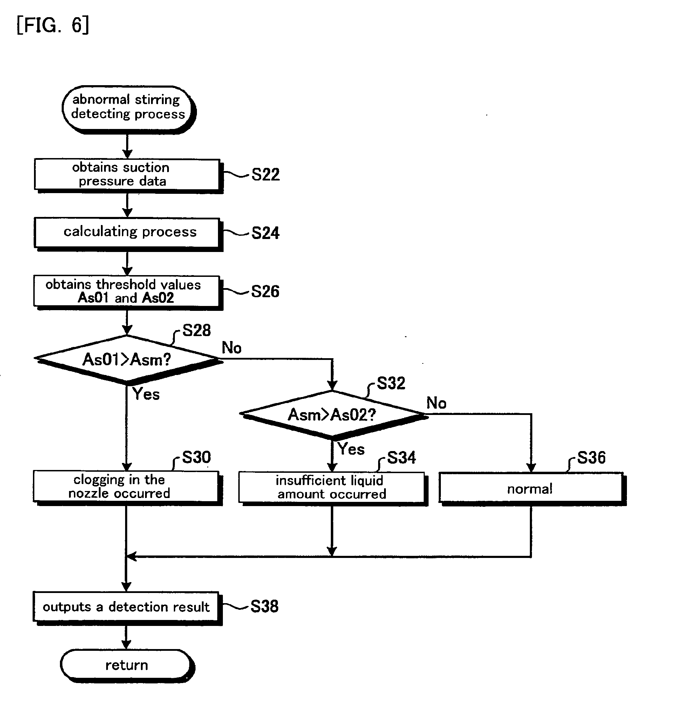

Next, the stirring process in the stirring device **1** will be described with reference to Figure **5****.** As illustrated in Figure **5****,** in the stirring device **1,** under a transferring process of the nozzle **2** by the nozzle transferring section **3** and a driving process of the piston **4b** by the piston driving section **7**, the nozzle **2** performs a undiluted liquid dispensing process for dispensing a predetermined amount of the sample **Sa**, the undiluted liquid, from the container **22** into the stirring container **23** (step **S1**). Next, under a driving process of the piston **14b** by the piston driving section **17,** the nozzle **12** performs a diluent injecting process for injecting a predetermined amount of the diluent **La** from the diluent tank **21** into the stirring container **23** (step **S2).** Subsequently, the nozzle transferring section **3** performs a nozzle lowering process for lowering the nozzle **2** into the stirring container **23** (step **S3).**

After the nozzle **2** is inserted into the stirring container by the nozzle transferring section **3,** the pressure measuring section **6** starts a pressure measuring process for measuring pressure applied to the nozzle **2** (step **S4**). Pressure measurement values measured by the pressure measuring section 6 are output to the abnormality detecting section **35** via the controlling section **30.**

Next, the piston driving section **7** slides the piston **4b** in a vertical downward direction, so that the nozzle **2** performs a stirring-subject liquid suction process for sucking stirring-subject liquid in the stirring container **23** (step **S5)**. Further, the piston driving section **7** slides the piston **4b** in a vertical upward direction, so that the nozzle **2** performs a stirring-subject liquid discharging process for discharging the sucked stirring-subject liquid into the stirring container **23** (step **S6).** When the stirring-subject liquid discharging process ends, the pressure measuring section **6** ends pressure measurement (step **S7**).

The controlling section **30** determines whether or not the stirring-subject liquid suction process (step **S5)** and stirring-subject liquid discharging process (step **S6)** are performed for a set number of times (step **S8).** If the controlling section **30** determines that the processes have not been performed for a set number of times (step **S8**: No), the process goes back to the step **S4** to perform the stirring-subject liquid suction process (step **S5)** and stirring-subject liquid discharging process (step **S6)** for a set number of times, and the pressure measurement starting process (step **S4),** stirring-subject liquid suction process (step **S5)** and stirring-subject liquid discharging process (step **S6)** are performed.

On the other hand, if the controlling section **30** determines that the stirring-subject liquid suction process (step **S5**) and stirring-subject liquid discharging process (step **S6)** have been performed a set number of times (step **S8:** Yes), in order to end the stirring process, the nozzle transferring section **3** performs a nozzle raising process for raising the nozzle **2** from the stirring container **23** (step **S9**).

Next, the abnormality detecting section **35** compares an integrated value of pressure measurement values of suction, among pressure values added to the nozzle **2** measured by the pressure measuring section **6,** with each of threshold values stored in the storing section **36** to perform an abnormal stirring detecting process for detecting the presence of abnormality in the stirring process and a cause of abnormal stirring (step **S10).**

Next, the controlling section **30** determines whether or not abnormality in the stirring process is detected by the abnormality detecting section **35** (step **S11**). If the controlling section **30** determines that abnormality is detected in the stirring process by the abnormality detecting section **35** (step **S11**: Yes), the controlling section **30** allows the output section **37** to output the fact that there is abnormality in the subject stirring process as well as an error message indicating the cause of the abnormality in the stirring process (step **S12).** On the other hand, if the controlling section **30** determines that no abnormality is an detected in the stirring process by the abnormality detecting section **35** (step **S11:** No), the controlling section **30** allows the output section **37** to output an message indicating that the subj ect stirring process has ended in a normal manner (step **S13).**

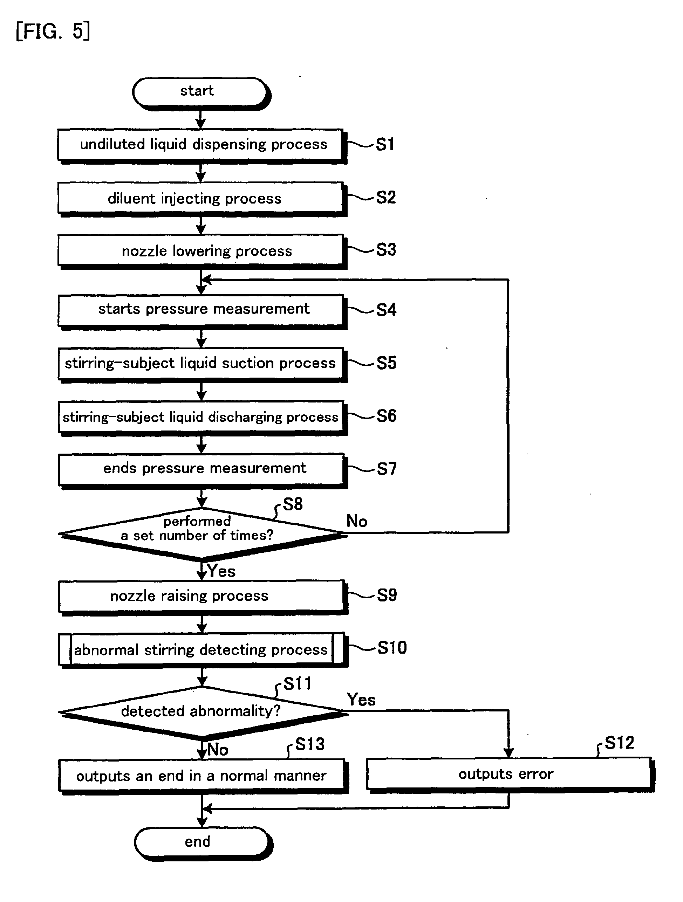

Next, the abnormal stirring detecting process illustrated in Figure **5** will be described with reference to Figure **6****.** As illustrated in Figure **6****,** the abnormality detecting section **35** obtains suction pressure data, which represents a pressure measurement value of suction, among pressure measurement values measured by the pressure measuring section **6** (step **S22**). Subsequently, the abnormality detecting section **35** performs a calculating process for integrating pressure measurement values within the predetermined period of time **Ts** for every set of stirring-subject liquid suction processes performed a set number of times to calculate an average value Asm of the integrated values (step **S24**). Next, theabnormalitydetecting section **35** obtains threshold values **As01** and **As02** from the storing section **36** (step **S26).** The abnormality detecting section **35** detects the presence of an abnormality in the stirring process and a cause of abnormal stirring by comparing the calculated average value **Asm** of the integrated values and the obtained threshold values **As01** and **As02.**

First, the abnormality detecting section **35** compares the threshold value **As01,** which is the upper limit of the above-described tolerance, and the calculated average value **Asm** of the integrated values to determine whether **As01** > **Asm** holds (step **S28**). If the abnormality detecting section **35** determines that **As01** > **Asm** (step **S28**: Yes), that is, if the average value **Asm** of the integrated values of actual suction pressure measurement values in the nozzle **2** is less than the threshold value **As01** and has deviated out of the tolerance, the threshold value being the lower limit of the tolerance and being a reference for determining the occurrence of clogging in the nozzle **2,** it is determined that the subject stirring process has not been performed in a normal manner due to clogging in the nozzle **2** (step **S30)**.

On the other hand, if the abnormality detecting section **35** determines that **As01** > **Asm** does not hold (step **S28 :** No), that is, if the average value **Asm** of the integrated values of actual suction pressure measurement values in the nozzle **2** is equal to or greater than the threshold value **As01,** the threshold value being the lower limit of the tolerance and being a reference for determining the occurrence of clogging in the nozzle **2,** the abnormality detecting section **35** compares the threshold value **As02,** which is the upper limit of the above-described tolerance, and the calculated average value **Asm** of the integrated values to determine whether or not **Asm** > **As02** holds (step **S32).**

If the abnormality detecting section **35** determines that **Asm** > **As02** holds (step **S32**: Yes) , that is, if the average value **Asm** of the integrated values of actual suction pressure measurement values in the nozzle **2** is more than the threshold **As02** and has deviated out of the tolerance, the threshold being a reference for determining the occurrence of the insufficient liquid amount or the nozzle **2** not reaching the liquid surface and being the upper limit of the tolerance, it is determined that the subject stirring process has not been performed in a normal manner due to the insufficient liquid amount or the nozzle **2** not reaching the liquid surface (step **S34).** In this case, abnormality in the transfer controlling of the nozzle transferring section **3** for transferring the nozzle **2,** insufficient dispensing amount of the sample **Sa** by the nozzle **2,** or insufficient injecting amount of the diluent **La** by the nozzle **12** is conceivable.

On the other hand, if the abnormality detecting section **35** determines that **Asm** > **As02** does not hold (step **S32**: No), since such a case occurs when the average value **Asm** of the integrated values of actual suction pressure measurement values in the nozzle **2** is within a reference range, it is determined that the stirring process has been performed in a normal manner (step **S36**). Subsequently, the abnormality detecting section **35** outputs a detection result (step **S38)**, and ends the abnormal stirring detecting process.

As described above, the stirring device **1** according to Embodiment 1 determines whether or not the stirring process has been performed in a normal manner on liquid of a stirring subject in the container, on the basis of the amount of deviation between a suction pressure waveform measured by the pressure measuring section 6 and the suction pressure waveform pre-obtained during normal stirring. Thereby, it becomes possible to prevent liquid that is not stirred in a normal manner from being used in an analyzing process, and reduce the waste of reagents and analyzing time in the analyzing process.

In addition, the stirring device 1 determines whether or not the integrated value of suction pressure measurement values within the predetermined period of time **Ts** of the suction pressure waveform measured by the pressure measuring section **6,** is within the tolerance range set on the basis of the integrated value of pressure measurement values within the predetermined period of time **Ts** of the suction pressure waveformpre-obtained during normal stirring. Inotherwords, the stirring device 1 determines whether there is abnormality in the stirring process using a value obtained by integrating timewise the amount of deviation from the suction pressure waveform of normal stirring of the suction pressure waveform measured by the pressure measuring section **6;** and there are a plurality of pressure measurement values to be integrated. Thereby, a more reliable determination can be made as to whether or not there is an abnormality in the stirringprocess, compared to the case where the determination is made using the amount of deviation at only one point. In addition, in the stirring device 1, the abnormality detecting process is performed on the basis of, not a pressure measurement value within an unstable state, but an integrated value of pressure measurement values within a period when the suction pressure waveform is stabilized. Thereby, itbecomespossible to reduce an influence of deviation in pressure measurement values in an unstable state to perform detecting of abnormality in a stirring process accurately. Further, in the stirring device 1, each integrated value of pressure measurement values is calculated for each plurality of suction processes and the abnormality detecting process is performed using the average value of the plurality of integrated values, so that there is a larger number of monitored points and measured suction pressure values to be averaged, compared to the case where the determination is made using an integrated value of pressure measurement values of only one suction process, thereby performing a reliable determination of whether or not there is an abnormality in a stirring process.

Further, according to Embodiment 1, it is possible to detect, not only the existence of a simple abnormality in a stirring process, but also the cause of the abnormality in the stirring process. Accordingly, a maintenance worker of the stirring device 1 can recognize with which mechanism a cause of abnormality in the stirring process is associated, thereby handling the abnormality in the stirring process of the stirring device quickly and accurately.

Typically, when different liquids of a stirring subj ect have the same amount and viscosity, a suctionpressure waveform will be substantially the same every time during a stirring process performed in a normal manner. Therefore, the stirring device 1 may determine the existence of abnormal stirring on the basis of each tolerance range in accordance with each amount and viscosity of liquid to be a stirring subj ect. More specifically, the stirring device 1 may perform stirring processes in advance with different amounts and viscosities of liquid, and obtain an integrated value of suction pressure values within a predetermined period of time of a suction pressure waveform in the stirring processes, and the stirring device 1 may set, on the basis of respective integrated values or the like, a threshold value **As01,** which is the lower limit of a tolerance range, and a threshold value **As02,** which is the upper limit of a tolerance range, corresponding to each amount and each viscosity of liquid.

In addition, according to Embodiment 1, it is also possible to provide a threshold value corresponding to each of the insufficient liquid amount and the nozzle 2 not reaching the liquid surface, to determine in detail which of the insufficient liquid amount or the nozzle 2 not reaching the liquid surface has caused an abnormal stirring process.

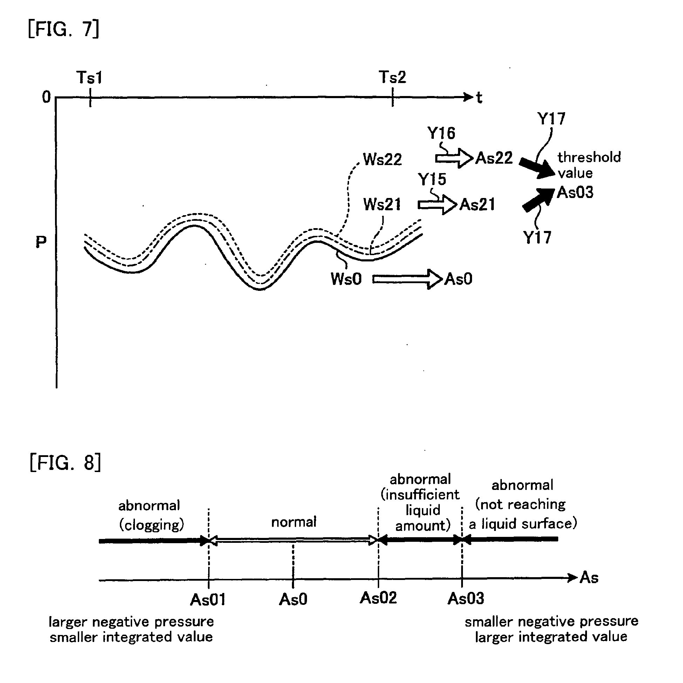

Figure **7** illustrates a waveform **Ws0** representing a suction pressure waveform of normal stirring as well as a waveform **Ws21** representing a suction pressure waveform of abnormal stirring resulting from an insufficient liquid amount, and a waveform **Ws22** representing a suction pressure waveform of abnormal stirring resulting from the nozzle **2** not reaching a liquid surface. As represented by the waveform **Ws21** in Figure **7****,** each suction pressure value at an insufficient liquid amount indicates a value with a lower negative pressure compared to the waveform **Ws0** at normal stirring because the amount of sucked liquid is less than a predetermined amount. Further, as represented by the waveform **Ws22** in Figure **7****,** each suction pressure value in the case of the nozzle **2** not reaching a liquid surface indicates a value with a still lower negative pressure, compared to the waveform **Ws21** in the case of an insufficient liquid amount, because the liquid cannot be sucked. As described above, a certain tendency can be recognized in a value distribution of respective suction pressure values in the case of an insufficient liquid amount and the case of the nozzle **2** not reaching a liquid surface. In the stirring device **1,** this tendency is used and a threshold value is set, which allows to distinguish the case of an insufficient liquid amount from the case of the nozzle **2** not reaching a liquid surface, in addition to the threshold value **As02,** which allows to distinguish whether or not it is normal stirring, to determine which is the cause of the abnormal stirring process, the insufficient liquid amount or the nozzle **2** not reaching a liquid surface.

More specifically, a threshold value **As03** may be set, which allows to distinguish the case of the insufficient liquid amount from the case of the nozzle **2** not reaching a liquid surface, as represented by an arrow **Y17,** on the basis of an average value **As21** of integrated values of suction pressure values within the predetermined period of time **Ts** in the waveform **Ws21** at an insufficient liquid amount represented by an arrow **Y15,** and an average value **As2**2 of integrated values of suction pressure values within the predetermined period of time **Ts** in the waveform **Ws22** in the case of the nozzle **2** not reaching a liquid surface represented by an arrow **Y16.**

Therefore, as illustrated in Figure **8****,** the abnormality detecting section **35** determines that a stirring process has not been performed in a normal manner due to an insufficient liquid amount in a case where an integrated value of suction pressure values is more than the threshold value **As02** and is equal to or less than the threshold value **As03** within a predetermined period of time **Ts,** during which pressure waveforms are stabilized. In addition, the abnormality detecting section **35** determines that a stirring process has not been performed in a normal manner due to the nozzle **2** not reaching a liquid surface in a case where an integrated value of suction pressure values is more than the threshold value **As02** and is still more than the threshold value **As03** within a predetermined period of time **Ts,** during which pressure waveforms are stabilized. As described above, by further providing the threshold value **As03**, the stirring device **1** may determine in detail which is the cause of an abnormal stirring process, the insufficient liquid amount or the nozzle **2** not reaching a liquid surface.

### (Embodiment 2)

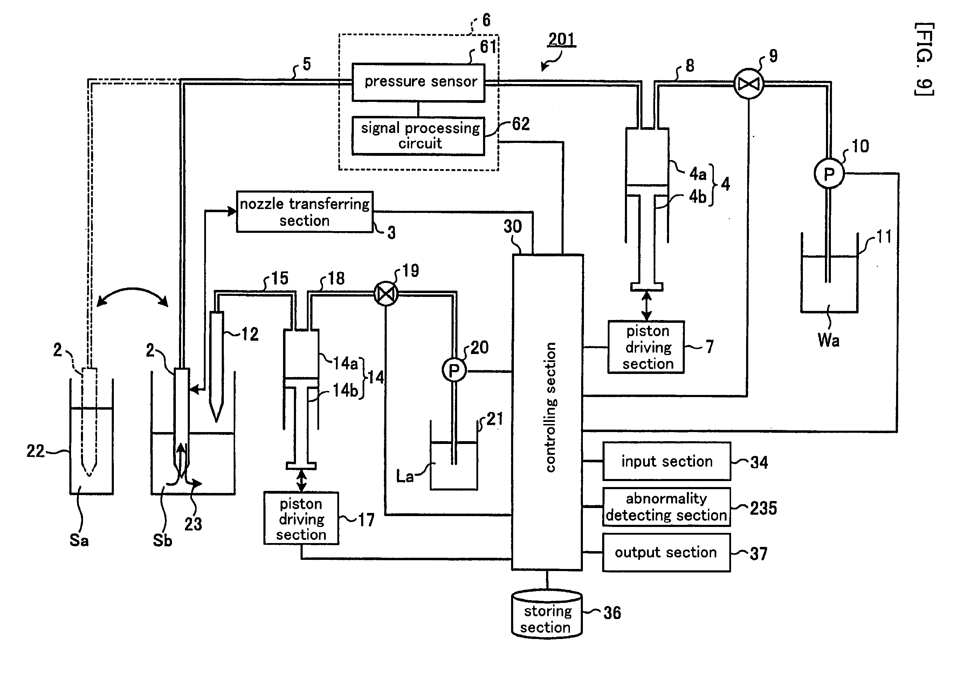

Next, Embodiment 2 will be described. In Embodiment 2, a case will be described for detecting abnormality in a stirring process on the basis of a pressure waveform at liquid discharging in the stirring process. Figure **9** is a diagram schematically illustrating a structure of a stirring device according to Embodiment 2. As illustrated in Figure **9****,** a stirring device **201** according to Embodiment **2** includes an abnormality detecting section **235** instead of the abnormality detecting section **35** illustrated in Figure **1****.**

The abnormality detecting section **235** determines whether or not a stirring process has been performed in a normal manner with respect to liquid **Sb** in a stirring container **23,** on the basis of the amount of deviation between a discharge pressure waveform representing a discharge pressure change measured by a pressure measuring section **6** and a discharge pressure waveform pre-obtained during normal stirring.

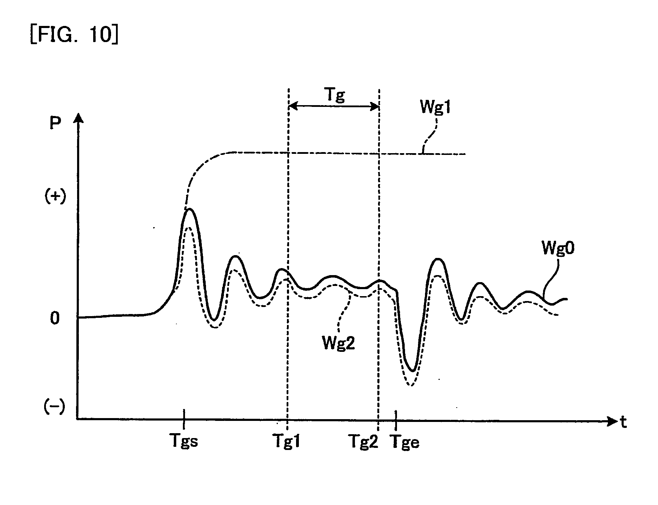

A discharge pressure waveform of normal stirring and a discharge pressure waveform of abnormal stirring will be specifically described with reference to Figure **10.** Figure **10** is a diagram illustrating time dependence between a discharge pressure of normal stirring and a discharge pressure of abnormal stirring. In Figure **10****,** a waveform **Wg0** represents a discharge pressure waveform at normal stirring; and a waveform **Wg2** represents a discharge pressure waveform of abnormal stirring resulting from an insufficient amount of liquid of a stirring subject or a nozzle **2** not reaching a liquid surface. In addition, at a time **Tgs,** sliding of a piston **4b** starts in an upward direction and liquid starts to be discharged. Subsequently, at a time **Tge,** the sliding of the piston **4b** in the upward direction is stopped and the discharge of the liquid ends.

As represented by the waveform **Wg0** in Figure **10****,** during normal stirring, a pressure waveform is represented with the amplitude becoming gradually smaller with the elapse of discharge. On the contrary, as represented by a waveform **Wg1** of abnormal stirring in Figure **10** resulting from the occurrence of clogging in a nozzle **2,** when the nozzle **2** is clogged, discharge pressure resulting from the clogging and is rapidly increased immediately after the start of discharging, and a saturated state with a large value is attained. In addition, if the amount of liquid of a stirring subject is not sufficient, the nozzle **2** will not be able to discharge a predetermined amount of liquid and the liquid of a discharging subject will be in a state where it does not exist in the nozzle **2** either from the beginning or at midway. Thus, a discharge pressure value will represent a state with a lower pressure compared to a normal state.

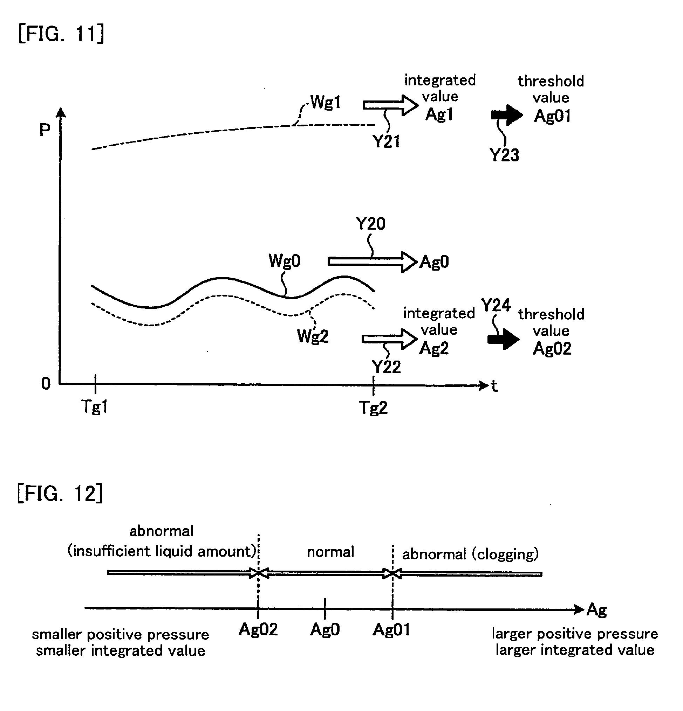

Next, Figure **11** illustrates each waveform during a predetermined period of time **Tg** from a time **Tg1** to a time **Tg2,** during which each of pressure waveforms is stabilized. As illustrated in Figure **11****,** the waveform **Wg1** of abnormal stirring resulting from the occurrence of clogging in a nozzle **2** constantly continues to represent a discharge pressure value higher than the waveform **Wg0** of normal stirring. Therefore, regarding an integrated value of discharge pressure values during the predetermined period of time **Tg** in the case where the nozzle **2** is clogged, an integrated value **Ag1** with respected to the waveform **Wg1** represented by an arrow **Y21** is constantly greater than an integrated value **Ag0** with respected to the waveform **Wg0** represented by an arrow **Y20.**

As described above, in the stirring device 201, it is determined whether or not there is an abnormality in a stirring process by using the fact that when the nozzle **2** is clogged, an integrated value of discharge pressure values during the predetermined period of time **Tg** is constantly greater than the integrated value **Ag0** with respect to the waveform **Wg0** of normal stirring.

More specifically, the stirring device **201** sets a predetermined threshold value **Ag01** as represented by an arrow **Y23,** on the basis of the integrated value **Ag0** of normal stirring and the integrated value **Ag1** of abnormal stirring resulting from the occurrence of clogging in the nozzle **2,** and determines abnormal stirring due to the occurrence of clogging in the nozzle **2,** using the threshold value. The threshold value **Ag01** is set on the basis of an integrated value of pressure measurement values within the predetermined period of time **Tg** of a discharge pressure waveform pre-obtained during normal stirring. The integrated value of pressure measurement values during the predetermined period of time **Tg** of a discharge pressure waveform pre-obtained during normal stirring, can be obtained by performing a stirring process for a set number of times at normal state, and obtaining an integrated value of pressure measurement values within the predetermined period of time **Tg** for each stirring process to calculate an average value of the integrated values. In addition, since it is necessary for an accurate amount of a diluent and a stirred sample to be dispensed by the stirring device **201,** the threshold value **Ag01** is set on the basis of dispensing accuracy of a dispensing device for the dispensing a predetermined amount of liquid, which is stirred by the stirring device **201,** for an analyzing process. For example, the threshold value **Ag01** is a value obtained by adding 20% to the average value of the integrated values **Ag0** of respective pressure measurement values of normal stirring.

Therefore, as illustrated in Figure **12****,** when the integrated value of discharge pressure values is more than the threshold value **Ag01** during the predetermined period of time **Tg,** during which each pressure waveform is stabilized, it can be determined that the nozzle **2** is clogged and the stirring process has not been performed in a normal manner.

Inaddition, as illustrated in Figure **11**, the waveform **Wg2** of abnormal stirring resulting from an insufficient liquid amount or the nozzle **2** not reaching a liquid surface, continues to represent a discharge pressure value lower than the waveform **Wg0** of normal stirring in most of the cases. Therefore, in the case where the amount of liquid of a stirring subject is not sufficient or the case where the nozzle **2** does not reach a liquid surface, regarding an integrated value of discharge pressure values during the predetermined period of time **Tg,** the integrated value **Ag2** with respect to the waveform Wg2 represented by an arrow Y22 is smaller than the integrated value **Ag0** with respect to the waveform **Wg0** of normal stirring.

As described above, in the stirring device **201,** it is determined whether there is abnormality in the stirring process by using the fact that the integrated value of discharge pressure values during the predetermined period of time **Tg** is smaller than the integrated value **Ag0** with respect to the waveform **Wg0** of normal stirring in the case where the amount of liquid of a stirring subject is not sufficient or the case where the nozzle **2** does not reach a liquid surface. More specifically, the stirring device **201** sets a predetermined threshold value **Ag02** as represented by an arrow **Y24** on the basis of the integrated value **Ag0** of normal stirring and the integrated value **Ag2** of abnormal stirring resulting from the insufficient amount of liquid or the nozzle **2** not reaching the liquid surface, and determines abnormal stirring due to the insufficient amount of liquid or the nozzle **2** not reaching the liquid surface, using the threshold value **Ag02.** The threshold value **Ag02** is set on the basis of the integrated value of pressure measurement values within the predetermined period of time **Tg** of the discharge pressure waveform pre-obtained during normal stirring. In addition, since it is necessary for an accurate amount of each of a diluent and a stirred sample to be dispensed by the stirring device **201,** the threshold value **Ag02** is determined on the basis of dispensing accuracy of a dispensing device for dispensing a predetermined amount of liquid, which is stirred by the stirring device **201,** for an analyzing process. For example, the threshold value **Ag02** is a value obtained by subtracting 20% from the average value of the integrated values **Ag0** of respective pressure measurement values of normal stirring.

Therefore, as illustrated in Figure **12****,** when the integrated value of discharge pressure values is less than the threshold value **Ag02** during the predetermined period of time **Tg,** during which eachpressure waveform is stabilized, it can be determined that the amount of the liquid is not sufficient or the nozzle **2** does not reach the liquid surface and the stirring process has not been performed in a normal manner.

That is, as illustrated in Figure **12****,** when the integrated value of discharge pressure values is within the range from the threshold value **Ag02** to the threshold value **Ag01** during the predetermined period of time **Tg,** during which each pressure waveform is stabilized, that is, when the integrated value is within the range of the upper limit of the threshold value **Ag01** and the lower limit of the threshold value **Ag02,** it can be determined that the stirring process is performed in a normal manner in the stirring device **201.** In addition, when the integrated value of discharge pressure values is more than the threshold value **Ag01,** it can be determined that the nozzle **2** is clogged and the stirring process has not been performed in a normal manner. Further, when the integrated value of discharge pressure values is less than the threshold value **Ag02,** it can be determined that the amount of liquid is not sufficient or the nozzle **2** does not reach the liquid surface, resulting in an abnormal stirring process.

As described above, in the stirring device **201,** the presence of an abnormality in the stirring process and the cause of the abnormal stirring are determined on the basis of the integrated value **Ag0** of normal stirring and tolerance between the threshold value **Ag01** and the threshold value **Ag02,** which is set on the basis of the dispensing accuracy of a dispensing device for dispensing a predetermined amount of liquid stirred by the stirring device **201.** In addition, it is noted that the storing section **36** stores the threshold value **Ag01** and the threshold value **Ag02.**

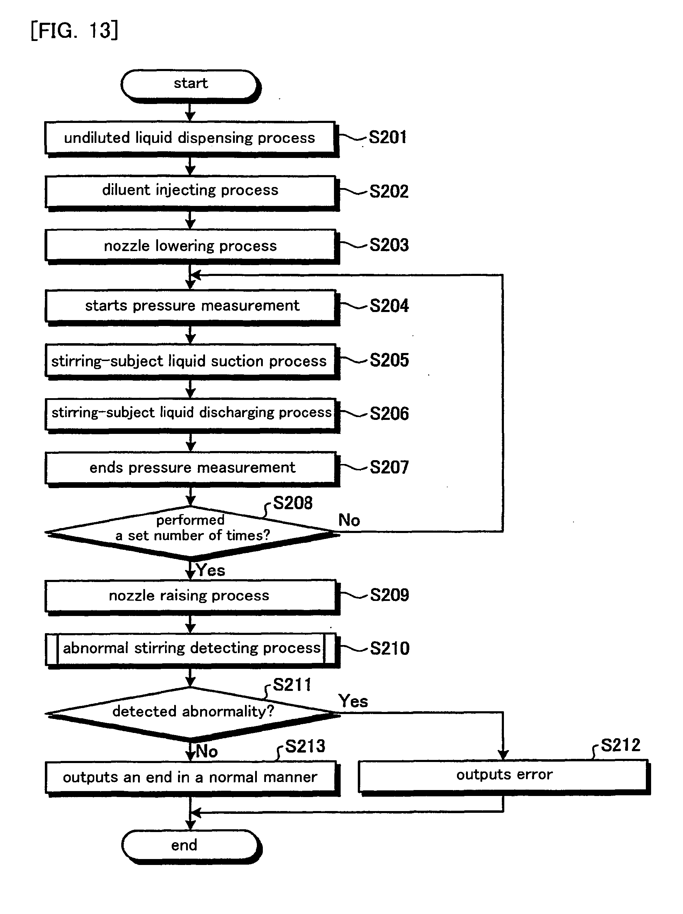

Next, the stirring process in the stirring device **201** will be described with reference to Figure **13****.** As illustrated in Figure **13****,** the stirring device **201** performs process steps similar to the steps **S1** to **S9** illustrated in Figure **5****,** so as to perform an undiluted solution dispensing process (step **S201**), adiluent injectingprocess (step **S202**), a nozzle lowering process (step **S203)**, a pressure measurement starting process (step **S204),** a stirring-subject liquid suction process (step **S205),** a stirring-subject liquid discharging process (step **S206),** a pressure measurement endingprocess (step **S207**), astirring-subject liquidsuction process and stirring-subject liquid discharging process performed for a set number of times determining process (step **S208),** and a nozzle raising process (step **S209).**

Next, the abnormality detecting section **235** compares an integrated value of pressure measurement values at discharge, among pressure values added to the nozzle **2** measured by the pressure measuring section **6,** with each of threshold values stored in the storing section **36** to perform an abnormal stirring detecting process for detecting the presence of abnormality in the stirring process and a cause of abnormal stirring (step **S210).**

Next, the stirring device **201** performs process steps similar to the steps **S11** to **S13** illustrated in Figure **5****,** so as to perform an abnormal stirring process detection determining process (step S211), an error output process (step **S212)** and a stirring process normal end output process (step **S213).**

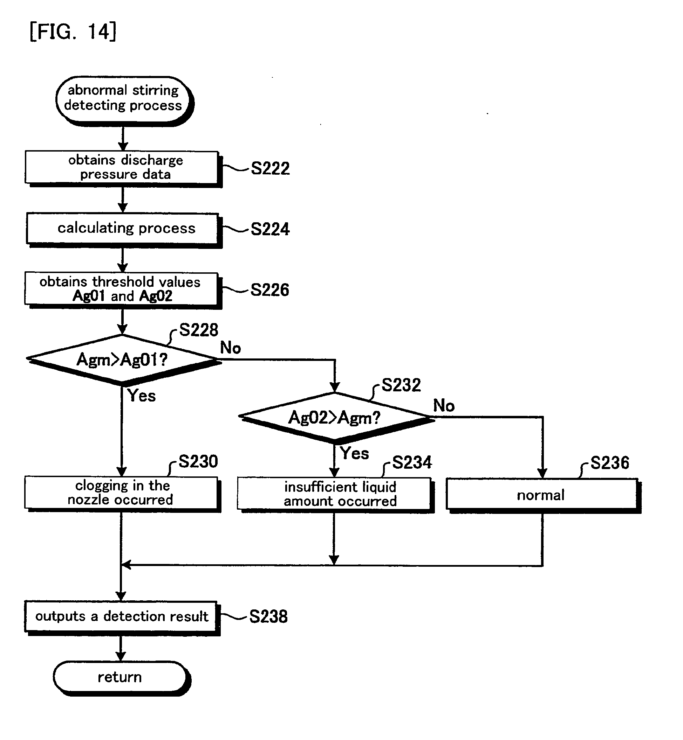

Next, the abnormal stirring detecting process illustrated in Figure **13** will be described with reference to Figure **14****. As** illustrated in Figure **14****,** the abnormality detecting **section 235** obtains discharge pressure data, which represents a pressure measurement value at discharge, among pressure measurement values measured by the pressure measuring section **6** (step **S222).** Subsequently, the abnormality detecting section **235** performs a calculating process for integrating pressure measurement values within the predetermined period of time **Tg** for every set of stirring-subject liquid discharging processes performed a set number of times to calculate an average value **Agm** of the integrated values (step **S224).** Next, the abnormality detecting section **235** obtains threshold values **Ag01** and **Ag02** from the storing section **36** (step **S226).** The abnormality detecting section **235** detects the presence of an abnormality in the stirring process and a cause of abnormal stirring by comparing the calculated average value **Agm** of the integrated values and the obtained threshold values **Ag01** and **Ag02.**

First, the abnormality detecting section **235** compares the threshold value **Ag01,** which is the upper limit of the above-described tolerance, and the calculated average value **Agm** of the integrated values to determine whether **Agm** > **Ag01** holds (step **S228**). If the abnormality detecting section **235** determines that **Agm** > **Ag01** (step **S228:** Yes), that is, if the average value **Agm** of the integrated values of actual discharge pressure measurement values in the nozzle **2** is more than the threshold value **Ag01** and has deviated out of the tolerance, the threshold value being the upper limit of the tolerance and being a reference for determining the occurrence of clogging in the nozzle **2,** it is determined that the subject stirring process has not been performed in a normal manner due to the clogging in the nozzle **2** (step **S230**).

On the other hand, if the abnormality detecting section **235** determines that **Agm** > **Ag01** does not hold (step **S228**: No), that is, if the average value **Agm** of the integrated values of actual discharge pressure measurement values in the nozzle **2** is equal to or less than the threshold value **Ag01,** the threshold value being the upper limit of the tolerance and being a reference for determining the occurrence of clogging in the nozzle **2,** the abnormality detecting section **235** compares the threshold value **Ag02,** which is the lower limit of the above-described tolerance, and the calculated average value Agm of the integrated values to determine whether or not **Ag02** > **Agm** holds (step **S232**).

If the abnormality detecting section **235** determines that **Ag02** > **Agm** holds (step **S232**: Yes), that is, if the average value **Agm** of the integrated values of actual discharge pressure measurement values in the nozzle **2** is less than the threshold **As02** and has deviated out of the tolerance, the threshold being a reference for determining the occurrence of the insufficient liquid amount or the nozzle **2** not reaching the liquid surface and being the lower limit of the tolerance, it is determined that the subject stirring process has not been performed in a normal manner due to the insufficient liquid amount or the nozzle **2** not reaching the liquid surface (step **S234**). In this case, an abnormality in the transfer controlling of the nozzle transferring section **3** for transferring the nozzle **2,** insufficient dispensing amount of the sample **Sa** by the nozzle **2,** or insufficient injecting amount of the diluent **La** by the nozzle **12** is conceivable.

On the other hand, if the abnormality detecting section **235** determines that **Ag02** > **Agm** does not hold (step **S232:** No), since such a case is where the average value **Agm** of the integrated values of actual discharge pressure measurement values in the nozzle **2** is within a reference range, it is determined that the stirring process has been performed in a normal manner (step **S236) .** Subsequently, the abnormality detecting section **235** outputs a detection result (step **S238),** and ends the abnormal stirring detecting process.

As described above, the stirring device 201 according to Embodiment 2 determines whether or not the stirring process has been performed in a normal manner on liquid of a stirring subject in the container, on the basis of the amount of deviation between the discharge pressure waveform measured by the pressure measuring section 6 and the discharge pressure waveform pre-obtained during normal stirring. Thereby, it becomes possible to prevent liquid that is not stirred in a normal manner from being used in an analyzing process, and reduce the waste of reagents and analyzing time in the analyzing process.

In addition, the stirring device **201** determines whether or not the integrated value of discharge pressure measurement values within the predetermined period of time **Tg** of the discharge pressure waveform measured by the pressure measuring section **6,** is within the tolerance range set on the basis of the integrated value of pressure measurement values within the predeterminedperiod of time **Tg** of discharge pressure waveforms pre-obtained at normal stirring. In other words, the stirring device **201** determines whether there is abnormality in the stirring process using a value obtained by integrating timewise the amounts of deviation from the discharge pressure waveform of normal stirring of a discharge pressure waveform measured by the pressure measuring section **6;** and there are a plurality of pressure measurement values to be integrated. Thereby, a more reliable determination can be made as to whether or not there is an abnormality in the stirring process, compared to the case where the determination is made using the amount of deviation at only one point. In addition, in the stirring device **201,** the abnormality detecting process is performed on the basis of, not a pressure measurement value in an unstable state, but an integrated value of pressure measurement values during a period when the discharge pressure waveform is stabilized. Thereby, it becomes possible to reduce an influence of deviation in pressure measurement values in an unstable state to perform detecting of abnormalities in a stirring process accurately. Further, in the stirring device **201,** each integratedvalue of pressure measurement values is calculated for each plurality of discharging processes and the abnormality detecting process is performed using the average value of the plurality of integrated values, so that there is a larger number of monitored points and measured discharge pressure values to be averaged, compared to the case where the determination is made using an integrated value of pressure measurement values of only one discharging process, thereby performing a reliable determination on whether or not there is abnormality in a stirring process.

Further, according to Embodiment 2, it is possible to detect, not only the existence of a simple abnormality in a stirring process, but also a cause of the abnormality in the stirring process. Accordingly, a maintenance worker of the stirring device 201 can recognize with which mechanism a cause of abnormality in the stirring process is associated, thereby handling the abnormality in the stirring process of the stirring device quickly and accurately.

Typically, when different liquids of a stirring subject have the same amount and viscosity, a discharge pressure waveform will be substantially the same every time during a stirring process in a normal manner. Therefore, the stirring device **201** may determine the existence of abnormal stirring on the basis of each tolerance range in accordance with each amount and viscosity of liquid to be a stirring subject. More specifically, the stirring device **201** may perform stirring processes in advance with different amounts and viscosities of liquid, and obtain an integrated value of discharge pressure values within a predetermined periodof time of a discharge pressure waveform in the stirring processes, and the stirring device **201** may set, on the basis of respective integrated values or the like, a threshold value **Ag01,** which is the upper limit of a tolerance range, and a threshold value **Ag02,** which is the lower limit of a tolerance range, corresponding to each amount and each viscosity of liquid.

In addition, according to Embodiment 2, it is also possible to provide a threshold value corresponding to each of the insufficient liquid amount and the nozzle **2** not reaching the liquid surface, to determine in detail which of the insufficient liquid amount or the nozzle **2** not reaching the liquid surface has caused an abnormal stirring process.

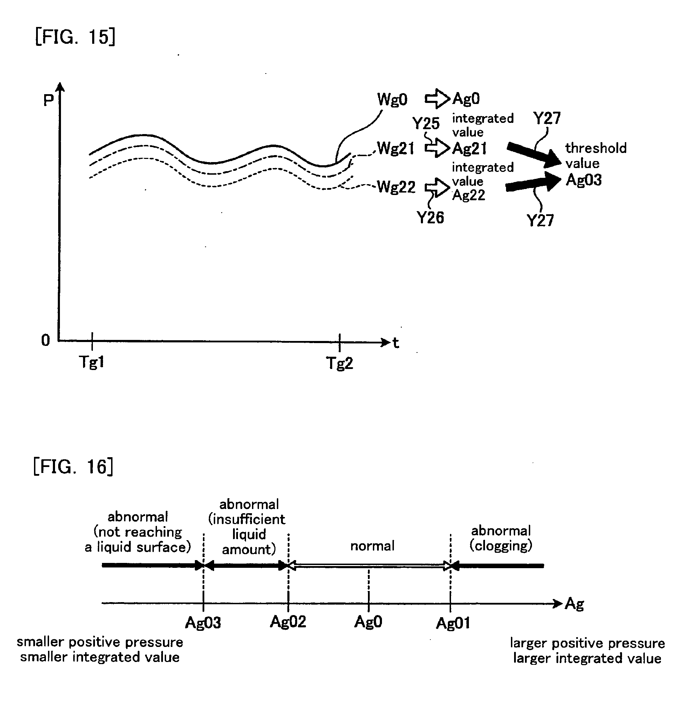

Figure **15** illustrates a waveform **Wg0** representing a discharge pressure waveform of normal stirring as well as a waveform **Wg21** representing a discharge pressure waveform of abnormal stirring resulting from an insufficient liquid amount, and a waveform **Wg22** representing a discharge pressure waveform of abnormal stirring resulting from the nozzle **2** not reaching a liquid surface. As represented by the waveform **Wg21** in Figure **15****,** each discharge pressure value of an insufficient liquid amount indicates a value with a lower negative discharge pressure compared to the waveform **Wg0** of normal stirring because the amount of discharged liquid is less than a predetermined amount. Further, as represented by the waveform **Wg22** in Figure **15****,** each discharge pressure value in the case of the nozzle **2** not reaching a liquid surface indicates a value with a still lower negative discharge pressure, compared to the waveform **Wg21** in the case of an insufficient liquid amount, because the liquid cannot be discharged. As described above, a certain tendency can be recognized in a value distribution of respective discharge pressure values in the case of an insufficient liquid amount and the case of the nozzle **2** not reaching a liquid surface. In the stirring device **201,** this tendency is used and a threshold value is set, which allows to distinguish the case of an insufficient liquid amount from the case of the nozzle **2** not reaching a liquid surface, in addition to the threshold value **Ag02,** which allows to distinguish whether or not it is normal stirring, to determine which is the cause of the abnormal stirring process, the insufficient liquid amount or the nozzle **2** not reaching a liquid surface.

More specifically, a threshold value **Ag03** may be set, which allows to distinguish the case of the insufficient liquid amount from the case of the nozzle **2** not reaching a liquid surface, as represented by an arrow **Y27,** on the basis of an average value **Ag21** of integrated values of discharge pressure values within the predetermined period of time **Tg** in the waveform **Wg21** at an insufficient liquid amount represented by an arrow **Y25,** and an average value **Ag22** of integrated values of discharge pressure values within the predetermined period of time **Tg** in the waveform **Wg22** in the case of the nozzle **2** not reaching a liquid surface represented by an arrow **Y26.**

Therefore, as illustrated in Figure **16****,** the abnormality detecting section **235** determines that a stirring process has not been performed in a normal manner due to an insufficient liquid amount in a case where an integrated value of discharge pressure values is less than the threshold value **Ag02** and is equal to or more than the threshold value **Ag03,** within a predetermined period of time **Tg,** during which pressure waveforms are stabilized. In addition, the abnormality detecting section **235** determines that a stirring process has not been performed in a normal manner due to the nozzle **2** not reaching a liquid surface in a case where an integrated value of discharge pressure values is less than the threshold value **Ag02** and is still less than the threshold value **Ag03,** within a predetermined period of time **Tg,** during which pressure waveforms are stabilized. As described above, by further providing the threshold value **Ag03,** the stirring device **201** may determine in detail which is the cause of an abnormal stirringprocess, the insufficient liquid amount or the nozzle **2** not reaching a liquid surface.

### (Embodiment 3)

Next, Embodiment 3 will be described. In Embodiment 3, a case will be described for detecting abnormality in a stirring process on the basis of both a pressure waveform at liquid suction and a pressure waveform at liquid discharge in a stirring process.

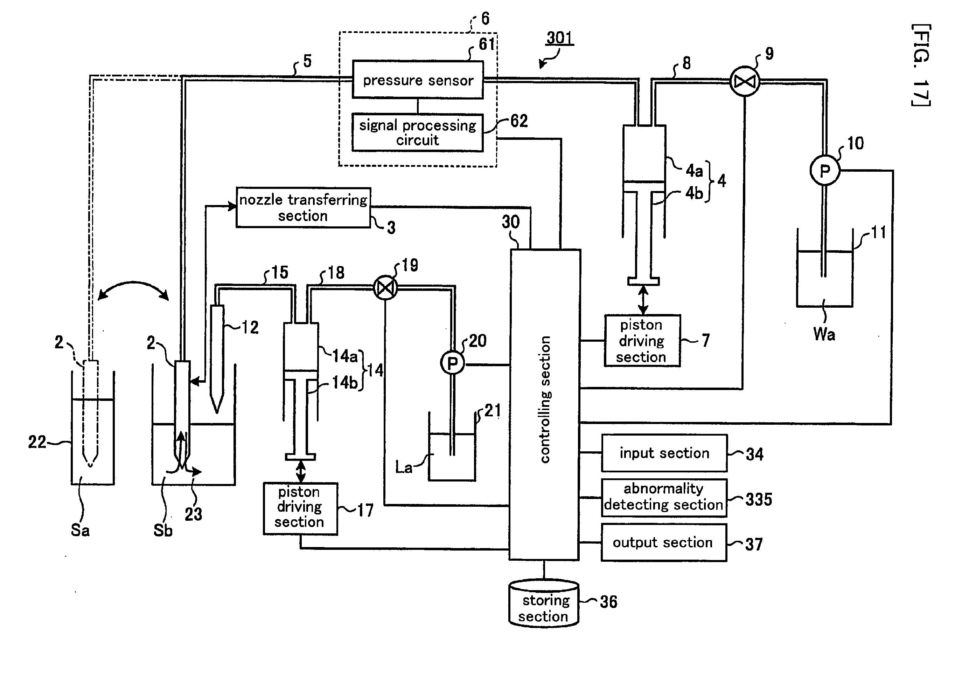

Figure **17** is a diagram schematically illustrating a structure of a stirring device according to Embodiment 3. As illustrated in Figure **17****,** a stirring device 301 according to Embodiment 3 includes an abnormality detecting section **335** instead of the abnormality detecting section **35** illustrated in Figure **1****.**

The abnormality detecting section **335** determines whether or not a stirring process has been performed in a normal manner with respect to liquid, on the basis of the amount of deviation between a suction pressure waveform representing a suction pressure change measured by a pressure measuring section **6** and a suction pressure waveform pre-obtained during normal stirring, as well as the amount of deviation between a discharge pressure waveform representing a discharge pressure change measured by the pressure measuring section **6** and a discharge pressure waveform pre-obtained during normal stirring.

The abnormality detecting section **335** herein performs abnormality detection on a stirring process, using an integrated value of suction pressure values measured by the pressure measuring section **6,** with the range from the threshold value **As01** to the threshold value **As02** set in Embodiment 1 as a first tolerance range. In addition, the abnormality detecting section **335** performs abnormality detection on a stirring process, using an integrated value of discharge pressure values measured by the pressure measuring section **6,** with the range from the threshold value **Ag01** to the threshold value **Ag02** set in Embodiment 2 as a second tolerance range.

The abnormality detecting section **335** determines that a stirring process has been performed in a normal manner on liquid when an integrated value of suction pressure measurement values within a predetermined period of time, of a suction pressure waveform measured by the pressure measuring section **6** is within the first tolerance range, which is set on the basis of an integrated value of pressure measurement values within a predetermined period of time of a suction pressure waveform pre-obtained during normal stirring;, and when an integrated value of discharge pressure measurement values within a predetermined period of time, of a discharge pressure waveform measured by the pressure measuring section **6** is within the second tolerance range, which is set on the basis of an integrated value of pressure measurement values within a predetermined period of time of a discharge pressure waveform pre-obtained during normal stirring. On the other hand, the abnormality detecting section **335** determines that a stirring process has not been performed in a normal manner on liquid when the integrated value of suction pressure measurement values measured by the pressure measuring section **6** has deviated out of the first tolerance, and/or the integrated value of discharge pressure measurement values measured by the pressure measuring section 6 has deviated out of the second tolerance.

Further, the abnormality detecting section **335** determines that the stirring process has not been performed in a normal manner on the liquid due to an insufficient liquid amount, the nozzle **2** not reaching a liquid surface, the nozzle **2** being clogged, or the nozzle **2** contacting a bottom surface of the container, in accordance with the combination of a case when the integrated value of suction pressure measurement values measured by the pressure measuring section **6** is more than the upper limit of the first tolerance range or a case when the integrated value of suction pressure measurement values measured by the pressure measuring section **6** is less than the lower limit of the first tolerance range, and a case when the integrated value of discharge pressure measurement values measured by the pressure measuring section **6** is more than the upper limit of the second tolerance range or a case when the integrated value of discharge pressure measurement values measured by the pressure measuring section **6** is less than the lower limit of the second tolerance range.

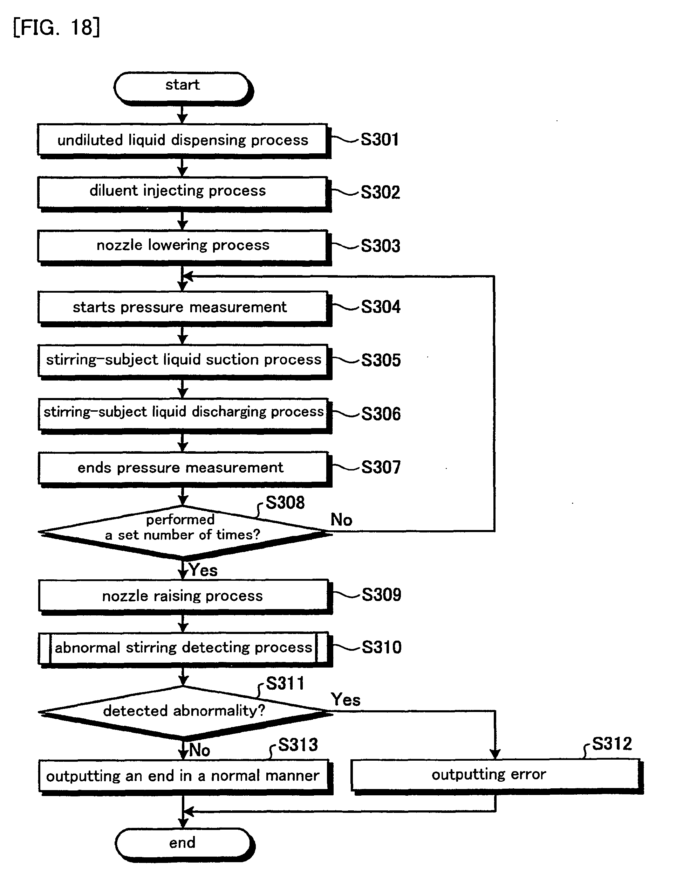

Next, the stirring process in the stirring device **301** will be described with reference to Figure **18****.** As illustrated in Figure **13****,** the stirring device **301** performs process steps similar to the steps **S1** to **S9** illustrated in Figure **5****,** so as to perform an undiluted solution dispensing process (step **S301**), a diluent injectingprocess (step **S302**), a nozzle lowering process (step **S303**), a pressure measurement starting process (step **S304),** a stirring-subject liquid suction process (step **S305),** a stirring-subject liquid discharging process (step **S306),** a pressure measurement ending process(step **S307**), astirring-subjectliquid suction process and stirring-subject liquid discharging process performed for a set number of times determining process (step **S308),** and a nozzle raising process (step **S309).**

Next, the abnormality detecting section **335** compares an integrated value of pressure measurement values within suction and an integrated value of pressure measurement values within discharge measured by the pressure measuring section **6,** with each of threshold values stored in a storing section **36** to perform an abnormal stirring detecting process for detecting the presence of abnormalities in the stirring process and a cause of abnormal stirring (step **S310).**

Next, the stirring device **301** performs process steps similar to the steps **S11** to **S13** illustrated in Figure **5****,** so as to perform an abnormal stirring process detection determining process (step **S311),** an error output process (step **S312)** and a stirring process normal end output process (step **S313).**

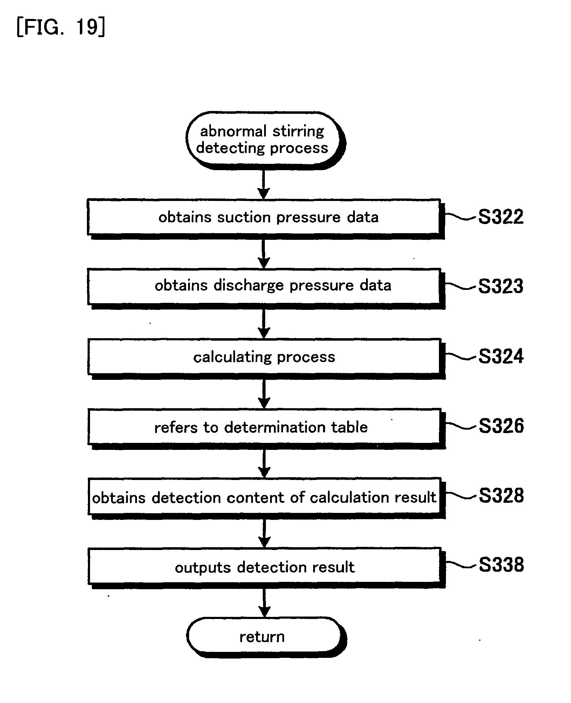

Subsequently, the abnormal stirring detecting process illustrated in Figure **18** will be described with reference to Figure **19****.** As illustrated in Figure **19****,** the abnormality detecting section **335** obtains suction pressure data, which represents a pressure measurement value at suction (step **S322),** and subsequently, obtains discharge pressure data, which represents a pressure measurement value at discharge (step **S323)**, among pressure measurement values measured by the pressure measuring section **6.** Subsequently, the abnormality detecting section **335** performs a calculating process for integrating pressure measurement values within the predetermined period of time **Ts** for every set of stirring-subject liquid discharging processes performed a set number of times to calculate an average value **Asm** of the integrated values as well as integrating pressure measurement values within the predetermined period of time **Tg** for every set of stirring-subject liquid discharging processes performed a set number of times to calculate an average value **Agm** of the integrated values (step **S324).**

Subsequently, the abnormality detecting section **335** refers to a determination table from the storing section **36,** the determination table representing contents of abnormality detected in a stirring process corresponding to each combination of the average values **Asm** and **Agm** of integrated values (step **S326).** The abnormality detecting section **335** obtains a detection result with respect to a stirring process, corresponding to a combination of the **Asm** and **Agm,** which are calculation results, by referring to the determination table (step **S328),** and outputs the obtained detection result (step **S338),** thus ending the abnormal stirring detecting process.

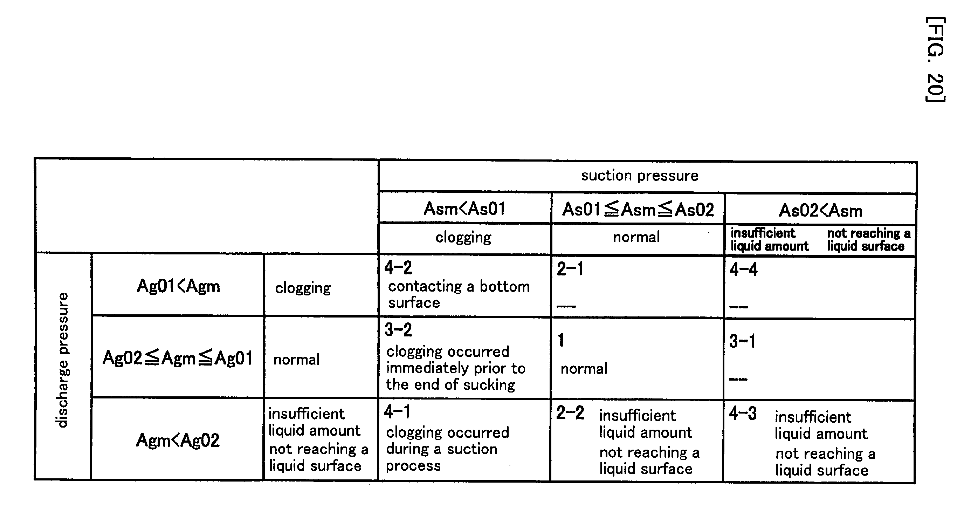

For example, as illustrated in Figure **20****,** the determination table shows combinations of the average value **Asm** of integrated values in suction pressure data and the average value **Agm** of integrated values in discharge pressure data, with corresponding results of whether or not there is abnormality in a stirring process as well as corresponding cause of abnormality; and the determination table is stored in the storing section **36.**

A case with a combination number "1" will be described. This is a case where the average value **Asm** of integrated values in suction pressure data is equal to or more than the **As01** and is equal to or less than the **As02,** and is within the first tolerance range, and where the average value **Agm** of integrated values in discharge pressure data is equal to or more than the **Ag02** and is equal to or less than the **Ag01,** and is within the second tolerance range. In such a case with the combination number "1", the tolerance range is satisfied both in the suction and discharge, and therefore, the abnormality detecting section **335** determines that the subject stirring process has been performed in a normal manner.

In addition, a case with a combination number "2-2" will be described. This is a case where the average value **Asm of** integrated values in suction pressure data is equal to or more than the **As01** and is equal to or less than the **As02,** and is within the first tolerance range, but where the average value **Agm** of integrated values in discharge pressure data is less than the **Ag02.** In this case, since the average value **Agm** of integrated values in discharge pressure data is less than the threshold value **Ag02** and has deviated out of the tolerance range, the threshold value being the lower limit of the tolerance range and being a reference for determining the occurrence of an insufficient liquid amount or the nozzle **2** not reaching a liquid surface, it can be determined that an insufficient liquid amount or the nozzle **2** not reaching a liquid surface has occurred in a discharging process for stirring-subject liquid. In such a case with the combination number "2-2" as described above, the abnormality detecting section **335** determines that the subject stirring process has not been performed in a normal manner due to an insufficient liquid amount or the nozzle **2** not reaching a liquid surface at a discharging process. In the case with the combination number "2-2", the average value is determined as being within the tolerance range in the suction process, and therefore, the insufficient liquid amount is insignificant compared to a case with "4-3" to be described later.

When the average value **Agm** of integrated values in discharge pressure data is more than the **Ag01** herein, it is when the nozzle **2** is clogged during a discharging process. In addition, in order for the nozzle **2** to be in a clogged condition during a discharging process for discharging sucked liquid, it can be said that such is a case where the nozzle **2** was already clogged during a suction process prior to the discharging process. Therefore, when the average value **Agm** of integrated values in discharge pressure data is more than the threshold value **Ag01,** it is apparent that the average value **Asm** of integrated values will be less than the threshold value **As01** resulting from the clogging in the nozzle **2** during the suction process, as well. Thus, it is considered that a case with a combination number "2-1", that is, a case where the average value **Asm** of integrated values in suction pressure data is equal to or more than the threshold value **As01** and is equal to or less than the threshold value **As02** as well as the average value **Agm** of integrated values in discharge pressure data is more than the threshold value **Ag01,** will not occur.

Further, a case with a combination number "3-2" will be described. This is a case where the average value **Agm** of integrated values in discharge pressure data is equal to or more than the **Ag02** and is equal to or less than the **Ag01** and is within the second tolerance range, but where the average value **Asm of** integrated values in suction pressure data is less than the **As01.** That is, this is a case where the average value **Asm** of integrated values in suctionpressure data is less than the threshold value **As01** and has deviated out of the tolerance range, the threshold value being the lower limit of the tolerance range and being a reference for determining the occurrence of clogging in the nozzle **2,** but the average value **Agm** of integrated values in discharge pressure data is normal. In this case, although abnormality is recognized in the suction process resulting from clogging in the nozzle **2,** the discharging process is performed in a normal manner. Thus, it can be considered that although clogging occurred in the nozzle **2** immediately prior to the end of the suction process of stirring-subject liquid, the clogging was solved at discharge and the amount of suction is at a level with substantially no problem. The insufficient liquid amount in the case with the combination number "3-2" is insignificant compared to a case with "4-1" to be described later.

When the average value **Asm** of integrated values in suction pressure data is more than the **As02** herein, it is when a set predetermined amount of liquid was not sucked due to the insufficient liquid amount or the nozzle **2** not reaching a liquid surface during a suction process. In addition, when it is only able to suck an amount of liquid that is less than the set amount, it means that only an amount of liquid that is less than the set amount can be discharged at a discharging process. Therefore, when the average value **Asm** of integrated values in suction pressure data is more than the **As02,** it is apparent that the average value **Agm** of integrated values will be less than the threshold value **Ag02** resulting from an insufficient liquid amount or the nozzle **2** not reaching a liquid surface. Thus, it is considered that a case with a combination number "3-1", that is, a case where the average value **Asm** of integrated values in suction pressure data is more than the threshold value **As02** as well as the average value **Agm** of integrated values in discharge pressure data is equal to or more than the threshold value **Ag02** and is equal to or less than the threshold value **Ag01,** will hardly ever occur. However, when the volume at suction is barely at the threshold value and the volume is immeasurable, there is a possibility for such a case to be a case with the combination number "3-1".

Next, a case with a combination number "4-1" will be described. The case with the combination number "4-1" is when the average value **Asm** of integrated values in suction pressure data is less than the threshold value **As01,** which is a reference for determining the occurrence of clogging in the nozzle **2,** and the average value **Agm** of integrated values in discharge pressure data is less than the threshold value **Ag02,** which is a reference for determining an insufficient liquid amount or the nozzle **2** not reaching a liquid surface. This is considered to be the case where the amount of discharged liquid is insufficient at a discharging process as a result that the nozzle **2** was clogged during a suction process and thus the amount of liquid sucked was small. Thus, in the case with the combination number "4-1", the abnormality detecting section **335** determines that the subject stirring process has not been performed in a normal manner due to the occurrence of clogging during the suction process.

Next, a case with a combination number "4-2" will be described. This is a case where the average value **Asm** of integrated values in suction pressure data is less than the threshold value **As01,** which is a reference for determining the occurrence of clogging in the nozzle **2,** and the average value **Agm** of integrated values in discharge pressure data is more than the threshold value **Ag01,** which is a reference for determining the occurrence of clogging in the nozzle **2.** For a case such as this, a case can be considered where the nozzle **2** is clogged from the beginning of suction and liquid is not sucked at all, for example, a case where the nozzle **2** contacts a bottom surface of the stirring container **23** with stirring-subject liquid contained therein. Thus, in the case with the combination number "4-2", the abnormality detecting section **335** determines that the subject stirring process has not been performed in a normal manner due to the nozzle contacting the bottom surface of the stirring container **23.** It is noted that in the case with the combination number "4-2", there is also a possibility that the case is due to simple clogging.

Next, a case with a combination number "4-3" will be described. This is a case where the average value **Asm** of integrated values in suction pressure data is more than the thresholdvalue **As02,** which is a reference for determining the occurrence of an insufficient liquid amount or the nozzle **2** not reaching a liquid surface, and the average value **Agm** of integrated values in discharge pressure data is less than the threshold value **Ag02,** which is a reference for determining an insufficient liquid amount or the nozzle **2** not reaching a liquid surface. This is considered to be the case when an insufficient liquid amount or the nozzle **2** not reaching a liquid surface has occurred both during a suction process and during a discharging process. When it is a case with the combination number "4-3", the abnormality detecting section **335** determines that the subject stirring process has not been performed in a normal manner due to an insufficient liquid amount or the nozzle **2** not reaching a liquid surface both during a suctionprocess and during a discharging process. The case with the combination number "4-3" means a completely insufficient liquid amount.

As previously described, it is apparent that the nozzle **2** was already clogged at a suction process when the average value **Agm** of integrated values in discharge pressure data is more than the **Ag01** and the nozzle **2** is clogged at a discharging process. Accordingly, it is apparent that when the average value **Agm** of integrated values in discharge pressure data is more than the threshold value **Ag01,** the average value **Asm** of integrated values will be less than the threshold value **As01** due to clogging in the nozzle **2,** during a suction process, as well. Thus, it is considered that the case with a combination number "4-4", that is, the case where the average value **Asm** of integrated values in suction pressure data is more than the threshold value **As02,** which is a reference for determining the occurrence of an insufficient liquid amount or the nozzle **2** not reaching a liquid surface, and the average value **Agm** of integrated values in discharge pressure data is more than the threshold value **Ag01,** will not occur.

As described above, the stirring device **301** according to Embodiment 3 uses both of the suction pressure waveform and the discharge pressure waveform measured by the pressure measuring section **6,** so that it becomes possible to detect the presence of an abnormality in a stirring process more reliably and detect a cause of the abnormality in the stirring process in detail, compared to a case where either one of the suction pressure waveform or the discharge pressure waveform is used.

In addition, in the stirring devices **1, 201** and **301** according to Embodiments 1 to 3, the rate of upward and downward driving by the piston **4b** may be set so that pressure measurement can be reliably performed by the pressure measuring section **6.** In the dispensing device, the rate of upward and downward driving by the piston therein is precisely controlled so that a predetermined amount of liquid can be dispensed accurately. On the contrary, it is enough for the stirring devices **1, 201** and **301** to be able to stir liquid sufficiently, and therefore, high dispensing accuracy is not particularly required of the stirring devices **1, 201** and **301.** Therefore, in the stirring devices **1, 201** and **301,** in order to obtain many pressure measurement points by the pressure measuring section **6,** the upward and downward driving rate by the piston **4b** may be adjusted in accordance with the pressure measurement timing by the pressure measuring section **6**. For example, the upward and downward driving rate can be slowed down than the upward and downward driving rate by the piston in the dispensing device by referring to the measurement timing of the pressure measuring section **6**. As a result, it becomes possible to detect abnormal stirring in the stirring devices **1, 201** and **301** with certain accuracy.

In addition, in the stirring devices **1, 201** and **301** according to Embodiments 1 to 3, abnormality is detected in a stirring process on the basis of a pressure value applied to the nozzle **2,** and abnormality can be detected in a stirring process as long as there is an enough amount of stirring-subject liquid for pressure measurement. Therefore, abnormalities can be detected sufficiently in a stirring process with respect to a small amount of stirring-subj ect liquid. In addition, in the stirring devices **1, 201** and **301** according to Embodiments 1 to 3, an abnormality is detected in a stirring process using a pressure value applied to the nozzle **2.** Therefore, abnormalities can be detected in a stirring process of stirring-subject liquid without the stirring-subject liquid having particular characteristics, such as conductivity.

The stirring devices **1, 201** and **301** according to Embodiments 1 to 3 can be applied as a stirring device in an analyzer for analyzing a sample, such as blood and urine. In this case, the stirring devices **1, 201** and **301** is applied as a stirring device for diluting a sample, such as blood and urine, with a predetermined diluent. More specifically, an analyzer which is applied with the stirring device **1** will be described, among the stirring devices **1, 201** and **301.**

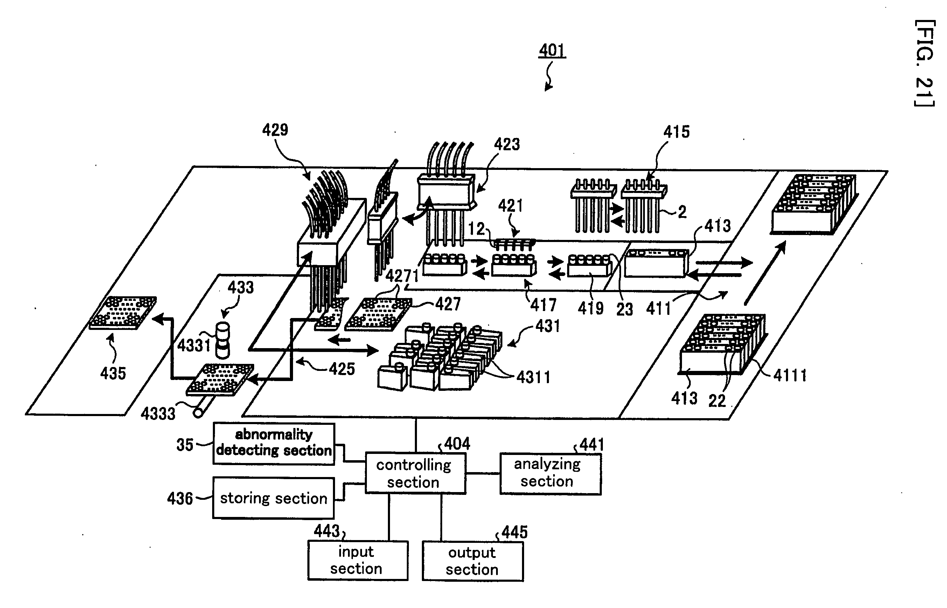

Figure **21** is a schematic perspective view illustrating an exemplary internal structure of an analyzer applied with the stirring device **1** illustrated in Figure **1****.** As illustrated in Figure **21****,** an analyzer **401** herein is a device for performing immunological testing, such as an antigen-antibody reaction of test blood, using an immunological agglutination reaction. The analyzer **401** includes: a sample rack conveying section **411;** a sample dispensing section **415;** a diluted sample rack conveying section **417;** a diluent dispensing section **421;** a diluted sample dispensing section **423;** a plate conveying section **425;** a reagent dispensing section **429;** a reagent storing section **431;** a measuring section **433;** and a plate collecting section **435.**

The sample rack conveying section **411** conveys a sample rack **413** arranged in a rack feeder **4111,** under the control of a controlling section **404** to be described later. The sample rack **413** is loaded with a plurality of containers **22,** which contain samples (specimens), and the sample rack conveying section **411** successively transfers the sample rack **413** to convey the containers **22** to a predetermined sample suction position.

In the meantime, at a predetermined diluent dispense position, a predetermined amount of a diluent is dispensed into each of stirring containers **23** in a diluted sample rack **419** by the diluent dispensing section **421** including a plurality of nozzles **12** for discharging a diluent. The stirring containers **23** which are dispensed with the diluent are transferred to a predetermined sample discharge position.

The sample dispensing section **415** includes a nozzle **2** for sucking and discharging a sample. Under the control of the controlling section **404**, the sample dispensing section **415** performs dispensing by sucking the sample in the container **22** by the nozzle **2,** the container **22** being transferred to the sample suction position, and successively discharging the sucked sample into each of the stirring containers **23** at the predetermined sample discharge position. Subsequently, through a suction process and a discharging process, the dispensed sample and the diluent are stirred.

The diluted sample dispensing section **423** includes a plurality of sample nozzles for performing suction and discharge of a diluted sample. Under the control of the controlling section **404,** the diluted sample dispensing section **423** sucks a diluted sample by each sample nozzle from each of the stirring containers **23** in the diluted sample rack **419** transferred to a diluted sample suction position, and transfers the diluted sample to a diluted sample discharge position. A microplate **427** is placed at the diluted sample discharge position, the microplate **427** being constituted of a plurality of reaction containers **4271,** referred to as a well, arranged in a matrix thereon. The diluted sample dispensing section **423** performs dispensing by discharging each diluted sample into each of the reaction containers **4271** of the microplate **427.**

In order to dispense the diluted sample and a reagent into each of the reaction containers **4271** of the microplate **427** and measure mixed liquid of the diluted sample and the reagent in each of the reaction containers **4271,** under the control of the controlling section **404,** the plate conveying section **425** transfers the microplate **427** at the diluted sample discharge position and conveys the reaction containers **4271** to a reagent discharge position, and subsequently conveys them to a measurement position. A reagent is dispensed by a reagent dispensing section **429** into the reaction containers **4271** conveyed to the reagent discharge position.

The reagent dispensing section **429** includes reagent nozzles, each of which performs suction and discharge of a reagent. Under the control of the controlling section **404,** the reagent dispensing section **429** sucks a reagent in each of reagent containers **4311** of a reagent storing section **431** by each reagent nozzle, and transfers the reagent to a reagent discharge position. Subsequently, the reagent dispensing section **429** discharges the reagent into the reaction containers **4271** conveyed by the plate conveying section **425** to the reagent discharge position. The reagent storing section **431** stores a plurality of reagent containers **4311** arranged therein, each of which contains a predetermined reagent that causes an antigen-antibody reaction with a sample.

The microplate **427** is conveyed to the measurement position by the plate conveying section **425** after the diluted sample is dispensed into the reaction containers **4271** by the diluted sample dispensing section **423,** a reagent is dispensed into the reaction containers **4271** by the reagent dispensing section **429,** and an antigen-antibody reaction is completed with the sample in the reaction containers **4271** with the elapse of a necessary reaction time. By the antigen-antibody reaction, an aggregation reaction pattern is formed at a bottom surface of each of the reaction containers **4271.**

The measuring section **433** includes: an image capturing section **4331,** such as a CCD camera, provided above a measurement position, for capturing from above an image of a microplate **427** conveyed to the measurement position; and a light source **4333** provided below the measurement position, for radiating irradiation light on reaction containers **4271** of the microplate **427.** The image capturing section **4331** receives light that has passed through the reaction containers **4271** to capture an image of an aggregation reaction pattern formed on the bottom surface each of the reaction containers **4271.** The obtained measurement result (image information) is output to the controlling section **404.** Typically, with regard to apositive sample, aggregation takes place with a sample and a reagent; and with regard to a negative sample, aggregation does not take place with a sample and a reagent.

The plate collecting section **435** collects a microplate **427** which has ended with measurement by the measuring section **433.** The collected microplate **427** is cleaned in a cleaning section (not shown) to be re-used. More specifically, mixed liquid in the reaction containers **4271** is discharged, and cleaning is performed by discharge and suction of cleaning liquid, such as a detergent or cleaning water. There is a case where the microplate **427** is thrown away after completion of one measurement depending on the content of testing.

In addition, the analyzer **401** includes a controlling section **404** for controlling sections which constitute the analyzer by instructing operational timings, transferring data and the like to the sections to control operation of the overall analyzer comprehensively. The controlling section **404** is constituted of a microcomputer or the like, which includes a memory built therein for storing, in addition to an analysis result, various data necessary for the operation of the analyzer **401,** and the controlling section **404** is placed at an appropriate position in the analyzer **401.** The controlling section **404** is connected with an analyzing section **441** and outputs a measurement result by the measuring section **433** to the analyzing section **441.** The analyzing section **441** analyzes an antigen-antibody reaction on the basis of a measurement result by the measuring section **433,** and outputs an analysis result to the controlling section **404.** For example, the analyzing section **441** performs image processing on image information obtained by the measuring section **433** to detect and judge an aggregation reaction pattern formed on each bottom surface of reaction containers **4271.** In addition, the controlling section **404** is connected with an input section **443** constituted of an input device, such as a keyboard and a mouse, for inputting information necessary for analysis, such as the number of samples and analysis items; and an output section **445** constituted of a display device and the like, such as an LCD and an ELD, for displaying an analysis result screen, a warning screen, an input screen for inputting various settings and the like. In addition, similar to the stirring device **1** illustrated in Figure **1**, the analyzer **401** includes: an abnormality detecting section **35** for detecting abnormality in a stirring process in the diluent dispensing section **421;** and a storing section **436** for storing various information used for an abnormality detecting process by the abnormality detecting section **35.**

As described above, the analyzer **401** includes the stirring device **1, 201** or **301** according to Embodiments 1 to 3, thereby preventing a sample and a diluent which are not stirred in a normal manner from being used in an analyzing process to improve analysis accuracy.

The stirring devices **1, 201** and **301** and the analyzer **401** described in the above embodiments can be achieved by executing a prepared program in a computer system. The computer system achieves processing operation of the analyzer by reading and executing a program recorded in a predetermined recording medium. Herein, the predetermined recording medium can be any recording medium for recording a program readable by a computer system, including a "portable medium", such as a flexible disk (FD), a CD-ROM, an MO disk, a DVD disk, a magneto-optical disk and an IC card, as well as a "communication medium" for storing a program for a short period of time in transmitting the program, such as a hard disk drive (HDD) provided either inside or outside the computer system. In addition, the computer system achieves processing operation of the stirring device and analyzer by obtaining a program from a management server or other computer system connected via a network line and executing the obtained program.

### INDUSTRIAL APPLICABILITY

As described above, the stirring device and analyzer according to the present invention is suitable for correctly detecting abnormalities in a stirring process and preventing liquid which has not been stirred in a normal manner from being used in an analyzing process.

## Claims

1. A stirring device for repeating suction and discharge of liquid in a container to stir the liquid, comprising:
a nozzle for sucking or discharging the liquid;
a pressure generating section for generating pressure necessary for the nozzle to suck or discharge the liquid;
a pressure measuring section for measuring pressure generated by the pressure generating section and applied to the nozzle; and
a determining section for determining whether or not a stirring process has been performed on the liquid in a normal manner, on the basis of an amount of deviation between a suction pressure waveform indicating a suction pressure change measured by the pressure measuring section, and a suction pressure waveform pre-obtained during normal stirring.

2. The stirring device according to claim 1, wherein the determining section determines that the stirring process has been performed on the liquid in a normal manner when an integrated value of suction pressure measurement values within a predetermined period of time of the suction pressure waveform measured by the pressure measuring section is within a first tolerance range, which is set on the basis of an integrated value of pressure measurement values within the predetermined period of time of the suction pressure waveform pre-obtained during normal stirring; and determines that the stirring process has not been performed on the liquid in a normal manner when the integrated value of the suction pressure measurement values measured by the pressure measuring section has deviated out of the first tolerance range.

3. The stirring device according to claim 2, wherein the determining section determines that the stirring process has not been performed on the liquid in a normal manner due to an insufficient liquid amount or the nozzle not reaching a liquid surface, when the integrated value of the suction pressure measurement values measured by the pressure measuring section is more than an upper limit of the first tolerance range; and determines that the stirring process has not been performed on the liquid in a normal manner due to clogging in the nozzle, when the integrated value of the suction pressure measurement values measured by the pressure measuring section is less than a lower limit of the first tolerance range.

4. A stirring device for repeating suction and discharge of liquid in a container to stir the liquid, comprising:
a nozzle for sucking or discharging the liquid;
a pressure generating section for generating pressure necessary for the nozzle to suck or discharge the liquid;
a pressure measuring section for measuring pressure generated by the pressure generating section and applied to the nozzle; and
a determining section for determining whether or not a stirring process has been performed on the liquid in a normal manner, on the basis of an amount of deviation between a discharge pressure waveform indicating a discharge pressure change measured by the pressure measuring section, and a discharge pressure waveform pre-obtained during normal stirring.

5. The stirring device according to claim 4, wherein the determining section determines that the stirring process has been performed on the liquid in a normal manner when an integrated value of discharge pressure measurement values within a predetermined period of time of the discharge pressure waveform measured by the pressure measuring section is within a second tolerance range, which is set on the basis of an integrated value of pressure measurement values within the predetermined period of time of the discharge pressure waveform pre-obtained during normal stirring; and determines that the stirring process has not been performed on the liquid in a normal manner when the integrated value of the discharge pressure measurement values measured by the pressure measuring section has deviated out of the second tolerance range.

6. The stirring device according to claim 5, wherein the determining section determines that the stirring process has not been performed on the liquid in a normal manner due to clogging in the nozzle, when the integrated value of the discharge pressure measurement values measured by the pressure measuring section is more than an upper limit of the second tolerance range; and determines that the stirring process has not been performed on the liquid in a normal manner due to an insufficient liquid amount or the nozzle not reaching a liquid surface, when the integrated value of the discharge pressure measurement values measured by the pressure measuring section is less than a lower limit of the second tolerance range.

7. A stirring device for repeating suction and discharge of liquid in a container to stir the liquid, comprising:
a nozzle for sucking or discharging the liquid;
a pressure generating section for generating pressure necessary for the nozzle to suck or discharge the liquid;
a pressure measuring section for measuring pressure generated by the pressure generating section and applied to the nozzle; and
a determining section for determining whether or not a stirring process has been performed on the liquid in a normal manner, on the basis of an amount of deviation between a suction pressure waveform indicating a suction pressure change measured by the pressure measuring section, and a suction pressure waveform pre-obtained during normal stirring as well as an amount of deviation between a discharge pressure waveform indicating a discharge pressure change measured by the pressure measuring section, and a discharge pressure waveform pre-obtained during normal stirring.

8. The stirring device according to claim 7, wherein the determining section determines that the stirring process has been performed on the liquid in a normal manner when an integrated value of suction pressure measurement values within a predetermined period of time of the suction pressure waveform measured by the pressure measuring section is within a first tolerance range, which is set on the basis of an integrated value of pressure measurement values within the predetermined period of time of the suction pressure waveform pre-obtained during normal stirring, and when an integrated value of discharge pressure measurement values within a predetermined period of time of the discharge pressure waveform measured by the pressure measuring section is within a second tolerance range, which is set on the basis of an integrated value of pressure measurement values within the predetermined period of time of the discharge pressure waveform pre-obtained during normal stirring; and determines that the stirring process has not been performed on the liquid in a normal manner when the integrated value of the suction pressure measurement values measured by the pressure measuring section has deviated out of the first tolerance range and/or when the integrated value of the discharge pressure measurement values measured by the pressure measuring section has deviated out of the second tolerance range.

9. The stirring device according to claim 8, wherein the determining section determines that the stirring process has not been performed on the liquid in a normal manner due to an insufficient liquid amount, the nozzle not reaching a liquid surface, clogging in the nozzle or the nozzle contacting a bottom surface of the container, in accordance with each combination of: when the integrated value of the suction pressure measurement values measured by the pressure measuring section is more than the upper limit of the first tolerance range; or when the integrated value of the suction pressure measurement values measured by the pressure measuring section is less than the lower limit of the first tolerance range; as well as when the integrated value of the discharge pressure measurement values measured by the pressure measuring section is more than the upper limit of the second tolerance range; or when the integrated value of the discharge pressure measurement values measured by the pressure measuring section is less than the lower limit of the second tolerance range.

10. The stirring device according to claim 2, 3, 8 or 9, wherein the first tolerance range is set on the basis of the integrated value of pressure measurement values within the predetermined period of time of the suction pressure waveform pre-obtained during normal stirring, and dispensing accuracy of a dispensing device for dispensing the liquid stirred by the stirring device.

11. The stirring device according to claim 5, 6, 8 or 9, wherein the second tolerance range is set on the basis of the integrated value of pressure measurement values within the predetermined period of time of the discharge pressure waveform pre-obtained during normal stirring, and dispensing accuracy of a dispensing device for dispensing the liquid stirred by the stirring device.

12. The stirring device according to claim 2, 3, 8, 9 or 10, wherein:
the pressure measuring section measures pressure applied to the nozzle for each suction process at the nozzle; and
the determining section calculates an average value of integrated values of suction pressure measurement values at suction processes measured by the pressure measuring section, and compares the calculated average value of the integrated values with the first tolerance range to determine whether or not the stirring process has been performed on the liquid in a normal manner.

13. The stirring device according to claim 5, 6, 8, 9 or 11, wherein:
the pressure measuring section measures pressure applied to the nozzle for each discharge process at the nozzle; and
the determining section calculates an average value of integrated values of discharge pressure measurement values at discharge processes measured by the pressure measuring section, and compares the calculated average value of the integrated values with the second tolerance range to determine whether or not the stirring process has been performed on the liquid in a normal manner.

14. The stirring device according to any one of claims 2, 3, 5, 6, 8 to 13, wherein the predetermined period of time is a period of time when a pressure waveform shape measured by the pressure measuring section is stabilized.

15. An analyzer comprising the stirring device according to any one of claims 1 to 14.
